# EUROPÄISCHE PATENTSCHRIFT

(11) **EP 3 782 340 B1**
(45) Veröffentlichungstag und Bekanntmachung des Hinweises auf die Patenterteilung: **09.03.2022**
(21) Anmeldenummer: 19718693.5
(22) Anmeldetag: 17.04.2019
(51) Int. Cl.: H04L 25/02

(54) **DECODERGESTÜTZTE ITERATIVE KANALSCHÄTZUNG**
DECODER-SUPPORTED ITERATIVE CHANNEL ESTIMATION
ESTIMATION ITÉRATIVE DU CANAL ASSISTÉE PAR DÉCODEUR

(30) Priorität: 20.04.2018 DE 102018206132
(43) Veröffentlichungstag der Anmeldung: 24.02.2021
(73) Patentinhaber: FRAUNHOFER-GESELLSCHAFT zur Förderung der angewandten Forschung e.V., 80686 München (DE); Friedrich-Alexander-Universität Erlangen-Nürnberg, 91054 Erlangen (DE)
(72) Erfinder: KILIAN, Gerd, 91058 Erlangen (DE); KINEISSL, Jacob, 91058 Erlangen (DE); OBERNOSTERER, Frank, 90411 Nürnberg (DE); MEYER, Raimund, 90765 Fürth (DE); GAMM, Eberhard, 91320 Ebermannstadt (DE); ROBERT, Jörg, 91080 Uttenreuth (DE); WECHSLER, Johannes, 91058 Erlangen (DE); BERNHARD, Josef, 91058 Erlangen (DE); SCHLICHT, Michael, 91058 Erlangen (DE)
(74) Vertreter: Schlenker, Julian
(86) Internationale Anmeldenummer: PCT/EP2019/060006
(87) Internationale Veröffentlichungsnummer: WO 2019/202039

(56) Entgegenhaltungen:
- EP-A1- 0 954 143
- DOWLER A ET AL: "Data-derived iterative channel estimation with channel tracking for a mobile fourth generation wide area ofdm system", GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, Bd. 2, 1. Dezember 2003 (2003-12-01), Seiten 804-808, XP010678176, DOI: 10.1109/GLOCOM.2003.1258350 ISBN: 978-0-7803-7974-9
- FABIEN DELESTRE ET AL: "An iterative joint channel estimation and data detection technique for MIMO-OFDM systems", WIRELESS COMMUNICATIONS AND MOBILE COMPUTING CONFERENCE (IWCMC), 2012 8TH INTERNATIONAL, IEEE, 27. August 2012 (2012-08-27), Seiten 195-199, XP032253301, DOI: 10.1109/IWCMC.2012.6314202 ISBN: 978-1-4577-1378-1

## Beschreibung

Ausführungsbeispiele beziehen sich auf einen Datenempfänger und, im speziellen, auf einen Datenempfänger mit iterativer Kanalschätzung. Weitere Ausführungsbeispiele beziehen sich auf ein Verfahren zum Empfangen von Daten, und im speziellen, auf ein Verfahren zum Empfangen von Daten mit einer iterativen Kanalschätzung. Manche Ausführungsbeispiele beziehen sich auf eine decodergestützte iterative Kanalschätzung.

Generell kann zwischen symbolgestützten, semi-blinden und blinden Verfahren der Kanalzustandsschätzung unterschieden werden. Für die symbolgestützte Kanalzustandsschätzung bei digitalen Übertragungssystemen existiert eine Reihe von bekannten Verfahren, wie z.B. die etablierten Algorithmen "Least Sum of Squared Errors" (LSSE) [1], "Minimum Mean Squared Error" (MMSE) [2]. Für zeitvariante Übertragungskanäle kommt die iterative Schätzung bzw. Nachführung einer (initialen) Kanalschätzung wie z.B. der bekannte "Least Mean Squares" (LMS) oder "Recursive Least Squares" (RLS) Algorithmus zum Einsatz [2]. Eine weitere Übersicht findet sich z.B. in [3].

Zur Erzeugung bzw. Nachführung der Kanalschätzwerte von zeitvarianten Übertragungskanälen können Kanalschätzung und Demodulation gemeinsam und iterativ durchgeführt werden ("Joint Sequence and Channel Estimation"), z.B. [4]. Als Basis für die Nachführung dienen dabei Schätzwerte für die gesendeten Symbole.

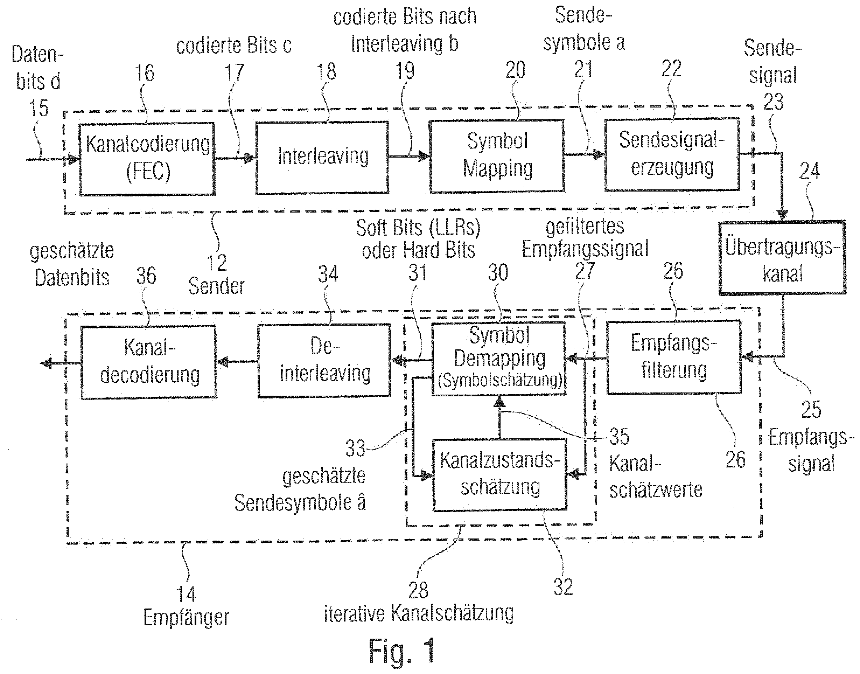

Herkömmlicherweise erfolgt die iterative Kanalschätzung jedoch im Ablauf zeitlich vor der Decodierung und unabhängig von dieser. Ein Informationsfluss zwischen der Kanaldecodierung und der Kanalschätzung erfolgt nicht. Dies ist in Fig. 1 beispielhaft für die typische Grundstruktur eines digitalen Übertragungssystems in Basisbanddarstellung gezeigt.

Im Detail zeigt Fig. 1 ein schematisches Blockschaltbild eines Systems mit einem Datensender 12 und einem Datenempfänger 14 mit einer iterativen Kanalschätzung. Der Datensender 12 umfasst einen Kanalcodierer (z.B. FEC, Vorwärtsfehlerkorrektur) 16, der ausgebildet ist, um Datenbits 15 (d) zu codieren, um codierte Bits 17 (c) zu erhalten, einen Interleaver 18, der ausgebildet ist, um die codierten Bits 17 (c) zu verschachteln (engl. interleaving), um codierte Bits nach dem Verschachteln 19 (b) zu erhalten, einen Modulator (z.B. Symbolabbilder, engl. symbol mapper) 20, der ausgebildet ist, um die codierten Bits nach dem Verschachteln 19 (b) auf Sendesymbole 21 (a) abzubilden, und einen Sendesignalerzeuger 22, der ausgebildet ist, um basierend auf den Sendesymbolen 21 (a) ein Sendesignal 23 zu erzeugen. Das Sendesignal 23 wird von dem Datensender 12 über einen Übertragungskanal 24 zu dem Datenempfänger 14 übertragen, wobei der Datenempfänger 14 ein Empfangssignal 25 empfängt, das eine durch den Übertragungskanal 24 modifizierte Version des Sendesignals 23 ist. Der Datenempfänger 14 umfasst einen Empfangsfilter 26, der ausgebildet ist, um das Empfangssignal 25 zu filtern, um ein gefiltertes Empfangssignal 27 zu erhalten. Ferner umfasst der Datenempfänger 14 eine iterative Kanalschätzung 28 bestehend aus einem Demodulator (z.B. Symbolschätzer bzw. Symbolrückabbilder (engl. symbol demapper)) 30 und einem Kanalzustandsschätzer 32, wobei der Demodulator 30 ausgebildet ist, um das gefilterte Empfangssignal 27 zu demodulieren um harte Bits (engl. hard bits) 31 oder weiche Bits (engl. soft bits) 31, wie z.B. LLRs (LLR = Log-Likelihood Ratios, dt. Log-Likelihood Verhältnisse) bereitzustellen, und wobei der Kanalzustandsschätzer 32 ausgebildet ist, um basierend auf dem gefilterten Empfangssignal (27) und basierend auf geschätzten Sendesymbolen 33 (ä) Kanalschätzwerte 35 für den Demodulator 30 bereitzustellen. Ferner umfasst der Datenempfänger 14 einen Entschachteler (engl. deinterleaver) 34 und einen Kanaldecodierer 36.

Die Leistungsfähigkeit eines digitalen Übertragungssystems wird u.a. durch seine Leistungseffizienz bestimmt. In vielen gängigen Systemen, wie z.B. digitalen Funkkommunikationssystemen nach GSM, UMTS oder LTE Standard, werden Verfahren zur kohärenten Demodulation des empfangenen Signals eingesetzt, welche als Voraussetzung eine Kanalschätzung benötigen. Die Qualität der Kanalschätzung hat dabei maßgeblichen Einfluss auf die Fehlerrate bei der Datenübertragung (z.B. Paketfehlerrate) und somit seine Leistungseffizienz.

In [7] wird eine datenbasierte iterative Kanalschätzung mit Kanalnachführung für ein drahtloses Kommunikationssystem beschrieben.

In [8] wird eine iterative, gemeinsame Kanalschätzungs- und Datendetektionstechnik für MIMO-OFDM Systeme beschrieben.

Der vorliegenden Erfindung liegt somit die Aufgabe zugrunde, die Qualität der Kanalschätzung zu verbessern.

Diese Aufgabe wird durch die unabhängigen Patentansprüche gelöst.

Vorteilhafte Weiterbildungen finden sich in den abhängigen Patentansprüchen.

Ausführungsbeispiele schaffen einen Datenempfänger, wobei der Datenempfänger ausgebildet ist, um ein Signal zu empfangen, wobei das Signal zumindest zwei separate Teil-Datenpakete aufweist, wobei die zumindest zwei separaten Teil-Datenpakete Symbole aufweisen, die codierte Bits abbilden, die aus einer für die zumindest zwei separaten Teil-Datenpakete gemeinsam durchgeführten Redundanz einbringenden Codierung einer Datenbitfolge resultieren, wobei der Datenempfänger [z.B. einen Kanalzustandsschätzer aufweist, der] ausgebildet ist, um basierend auf dem empfangenen Signal [z.B. zunächst basierend auf Pilotsymbolen der separaten Teil-Datenpakete] einen Kanalzustand eines Übertragungskanals des Signals zu schätzen, um eine erste Kanalzustandsinformation zu erhalten, wobei der Datenempfänger [z.B. einen Demodulator/Demapper aufweist, der] ausgebildet ist, um unter Verwendung der ersten Kanalzustandsinformation einen ersten Satz von empfangenen Symbolen aus verschiedenen Teil-Datenpaketen zu demodulieren, wobei der erste Satz von empfangenen Symbolen eine echte Teilmenge der empfangenen Symbole der zumindest zwei Teil-Datenpakete ist, um einen ersten Satz von empfangenen codierten Bits zu erhalten [z.B. wobei der erste Satz von empfangenen Symbolen so gewählt ist, dass er eine Rekonstruktion des ersten Satzes von empfangenen codierten Bits ermöglicht], wobei der erste Satz von empfangenen codierten Bits [z.B. für sich genommen (z.B. unabhängig von anderen empfangenen Symbolen und/oder unabhängig von anderen empfangenen codierten Bits)] unter Ausnutzung der senderseitigen Redundanz einbringenden Codierung einen Rückschluss auf einen dem ersten Satz von empfangenen codierten Bits senderseitig korrespondierenden ersten Satz von codierten Bits ermöglicht, wobei der Datenempfänger [einen Sendesymbolschätzer aufweist, der] ausgebildet ist, um den ersten Satz von empfangenen codierten Bits [z.B. unter Ausnutzung der senderseitigen Redundanz einbringenden Codierung] zu decodieren [z.B. unabhängig von anderen in den Teil-Datenpaketen enthaltenen codierten Datenbits (Teildecodierung)], um unter Ausnutzung der senderseitigen Redundanz einbringenden Codierung einen ersten Satz von geschätzten codierten Bits zu ermitteln, [z.B. der am wahrscheinlichsten dem ersten Satz von codierten Bits entspricht], und um den ersten Satz von geschätzten Bits unter Verwendung einer mit einer senderseitigen Abbildungsvorschrift übereinstimmenden Abbildungsvorschrift auf geschätzte Sendesymbole abzubilden, um einen ersten Satz von geschätzten Sendesymbolen zu erhalten, wobei der Datenempfänger [z.B. der Kanalzustandsschätzer] ausgebildet ist, um eine zweite Kanalzustandsinformation [z.B. eine aktualisierte oder eine erweiterte Kanalzustandsinformation] unter Verwendung des ersten Satzes von geschätzten Sendesymbolen zu bestimmen.

Bei Ausführungsbeispielen erfolgt eine decodergestützte, iterative Schätzung eines potentiell zeitvarianten Übertragungskanals im Empfänger eines digitalen Übertragungssystems.

Hierbei erfolgt die Kanalzustandsschätzung auf Basis geschätzter Symbole oder einer Kombination aus vorab bekannten und geschätzten Symbolen, wobei die zu schätzenden Symbole senderseitig mit Hilfe einer Kanalkodierung, wie z.B. einer Vorwärtsfehlerkorrektur (engl. "Forward Error Correction", FEC), unter Einbringung von Redundanz aus den zu übertragenden Quellbits der Nachricht generiert werden.

Die Schätzgenauigkeit einer symbolgestützten Kanalzustandsschätzung, welche auf im Empfänger vorab unbekannten Symbolen basiert, korreliert stark mit der Qualität der Symbolschätzung.

Der vorliegenden Erfindung liegt die Idee zugrunde, die Qualität der Schätzung der im Empfänger zunächst unbekannten codierten (z.B. FEC codierten) Symbole (z.B. erheblich) zu steigern, indem im Zuge der iterativen Kanalschätzung eine begleitende, fortlaufende Teildecodierung der bis zum jeweiligen Zeitpunkt schätzbaren Symbole erfolgt. Hierdurch kann der Decodiergewinn bereits während der Kanalschätzung genutzt werden. Bei Ausführungsbeispielen kann dadurch die Qualität der Schätzung der Sendesymbole (als Eingangsvariablen der Kanalzustandsschätzung) verbessert werden.

Ausführungsbeispiele schaffen eine qualitativ verbesserte Kanalschätzung insbesondere bei zeitvarianten Übertragungskanälen und führen somit zu einer verbesserten Leistungsfähigkeit des gesamten Übertragungssystems. Dies wirkt sich beispielsweise in Form einer höheren Zuverlässigkeit der Übertragung bei gegebener Störung (niedrigere Fehlerrate) oder in Form einer größeren Robustheit gegenüber Störungen der Übertragung bei gegebener Fehlerrate aus.

Im Folgenden werden vorteilhafte Weiterbildungen der vorliegenden Erfindung beschrieben.

Bei Ausführungsbeispielen enthalten die zumindest zwei separaten Teil-Datenpakete codierte Bits [bzw. Symbole, die die codierten Bits abbilden] welche aus einer (einzigen) codierten Datenbitfolge stammen.

Bei Ausführungsbeispielen wird die Codierung datensenderseitig gemeinsam für die zumindest zwei separaten Teil-Datenpakete durchgeführt, d.h. es wird nur eine (einzige) Codierung durchgeführt und die codierten Daten dann auf die Teil-Datenpakete aufgeteilt.

Bei Ausführungsbeispielen kann der erste Satz von empfangenen Symbolen in den jeweiligen Teil-Datenpaketen [z.B. unmittelbar] benachbart zu Pilotsymbolen der zumindest zwei Teil-Datenpakete angeordnet sein.

Bei Ausführungsbeispielen kann ein erster Teil [z.B. eine erste Hälfte] des ersten Satzes von empfangenen Symbolen in den jeweiligen Teil-Datenpaketen zeitlich [z.B. unmittelbar] vor den Pilotsymbolen der zumindest zwei Teil-Datenpakete angeordnet sein, wobei ein zweiter Teil [z.B. eine zweite Hälfte] des ersten Satzes von empfangenen Symbolen in den jeweiligen Teil-Datenpaketen zeitlich [z.B. unmittelbar] nach den Pilotsymbolen der zumindest zwei Teil-Datenpakete angeordnet sein kann.

Bei Ausführungsbeispielen kann der Datenempfänger [oder der Demodulator/Demapper des Datenempfängers] ausgebildet sein, um unter Verwendung der zweiten Kanalzustandsinformation einen zweiten Satz von empfangenen Symbolen aus verschiedenen Teil-Datenpaketen zu demodulieren, wobei der zweite Satz von empfangenen Symbolen eine echte Teilmenge der empfangenen Symbole der zumindest zwei Teil-Datenpakete ist, um einen zweiten Satz von empfangenen codierten Bits zu erhalten.

Bei Ausführungsbeispielen kann der zweite Satz von empfangenen Symbolen in den jeweiligen Teil-Datenpaketen einen zeitlich größeren Abstand zu Pilotsymbolen der zumindest zwei Teil-Datenpakete aufweisen als der erste Satz von empfangenen Symbolen.

Bei Ausführungsbeispielen kann der zweite Satz von empfangenen Symbolen in den jeweiligen Teil-Datenpaketen [z.B. unmittelbar] benachbart zu dem ersten Satz von empfangenen Symbolen angeordnet sein.

Bei Ausführungsbeispielen kann ein erster Teil [z.B. eine erste Hälfte] des zweiten Satzes von empfangenen Symbolen in den jeweiligen Teil-Datenpaketen zeitlich vor dem ersten Teil des ersten Satzes von empfangenen Symbolen angeordnet sein, wobei ein zweiter Teil [z.B. eine zweite Hälfte] des zweiten Satzes von empfangenen Symbolen in den jeweiligen Teil-Datenpaketen zeitlich nach dem zweiten Teil des ersten Satzes von empfangenen Symbolen angeordnet sein kann.

Bei Ausführungsbeispielen kann der Datenempfänger [oder der Kanalzustandsschätzer des Datenempfängers] ausgebildet sein, um zunächst basierend auf Pilotsymbolen der zumindest zwei separaten Teil-Datenpakete den Kanalzustand des Übertragungskanals zu schätzen, um die erste Kanalzustandsinformation zu erhalten.

Bei Ausführungsbeispielen kann der Datenempfänger [oder der Kanalzustandsschätzer des Datenempfängers] ausgebildet sein, um den Kanalzustand unter Verwendung des ersten Satzes von geschätzten Sendesymbolen zu schätzen, um die zweite Kanalzustandsinformation zu erhalten.

Bei Ausführungsbeispielen kann der Datenempfänger [oder der Kanalzustandsschätzer des Datenempfängers] ausgebildet sein, um den Kanalzustand des Übertragungskanals für jedes der zumindest zwei separaten Teil-Datenpakete zu schätzen.

Bei Ausführungsbeispielen kann der erste Satz von empfangenen Symbolen so gewählt sein, dass der erste Satz von empfangenen Symbolen eine Rekonstruktion des ersten Satzes von empfangenen codierten Bits ermöglicht.

Bei Ausführungsbeispielen kann der erste Satz von empfangenen codierten Bits unabhängig von anderen empfangenen Symbolen und/oder unabhängig von anderen empfangenen codierten Bits einen Rückschluss auf zumindest ein zu übertragendes erstes Datenbit unter Ausnutzung eines Codierungsgewinns ermöglichen [Teildecodierung].

Bei Ausführungsbeispielen kann der Datenempfänger [oder der Sendesymbolschätzer des Datenempfängers] ausgebildet sein, um den ersten Satz von empfangenen codierten Bits unter Ausnutzung einer senderseitigen Redundanz einbringenden Codierung zu decodieren.

Bei Ausführungsbeispielen kann der Datenempfänger [oder der Sendesymbolschätzer des Datenempfängers] ausgebildet sein, um den ersten Satz von empfangenen codierten Bits unter Verwendung eines Viterbi Decoders zu decodieren.

Bei Ausführungsbeispielen kann der Datenempfänger ausgebildet sein, um den ersten Satz von empfangenen Symbolen aus den empfangenen Symbolen der zumindest zwei separaten Teil-Datenpakete basierend auf einem dem Datenempfänger bekannten Verschachtelungsmuster [engl. interleaving pattern] auszuwählen, wobei das Verschachtelungsmuster mit einem senderseitigen Verschachtelungsmuster übereinstimmt, basierend auf dem die codierten Bits datensenderseitig auf die zumindest zwei separaten Teil-Datenpakete verschachtelt aufgeteilt werden.

Bei Ausführungsbeispielen kann das Verschachtelungsmuster eine zyklische Verschiebung einer vorgegebenen Anzahl von codierten Bits [z.B. von 48 Bits] aufweisen.

Bei Ausführungsbeispielen kann der Datenempfänger [oder der Demodulator des Datenempfängers] ausgebildet sein, um den ersten Satz von empfangenen Symbolen zu demodulieren und eine Zuverlässigkeit für den ersten Satz von codierten Bits oder jedes codierten Bits des ersten Satzes von codierten Bits zu schätzen [engl. soft decision demodulation], um für den ersten Satz von codierten Bits zusätzlich eine Zuverlässigkeitsinformation zu erhalten.

Bei Ausführungsbeispielen kann der Datenempfänger [oder der Demodulator/Demapper des Datenempfängers] ausgebildet sein, um aus dem ersten Satz von empfangenen Symbolen einen ersten Satz von empfangenen codierten Bits in Form harter/binärer Entscheidungen (engl. hard-output) oder mit (zusätzlicher) Bereitstellung von Zuverlässigkeitsinformation (weiche Entscheidung, engl. soft-output) zu schätzen.

Beispielsweise kann zwischen einer Demodulation bzw. Symbolschätzung mit Zuverlässigkeitsinformation (engl. soft-decision bzw. soft-bit demodulation) und einer Demodulation bzw. Symbolschätzung ohne Zuverlässigkeitsinformation (engl. hard-decision bzw. hard-bit demodulation) unterschieden werden. Bei der Demodulation bzw. Symbolschätzung mit Zuverlässigkeitsinformation wird kein "hart" entschiedenes Bit geliefert, sondern eine Zuverlässigkeitsinformation, z.B. P(bit=0)=P0, P(bit=1)=1-P0. Ein log-likelihood ratio (LLR) ist hierbei eine mögliche logarithmische Darstellungsform, hier z.B.: LLR=log (P0/(1-P0)).

Bei Ausführungsbeispielen kann der Datenempfänger [oder der Sendesymbolschätzer des Datenempfängers] ausgebildet sein, um basierend auf dem ersten Satz von empfangenen codierten Bits einen ersten Satz von geschätzten Sendesymbolen mit Zuverlässigkeitsinformation bereitzustellen.

Beispielsweise können am Eingang des Kanalzustandsschätzers des Datenempfängers "harte" Symbole (=Symbole ohne Zuverlässigkeitsinformation) oder aber auch "weiche" Symbole (=Symbole mit Zuverlässigkeitsinformation) anliegen, sofern der Sendesymbolschätzer "weiche" Symbole liefert. Bei Ausführungsbeispielen kann der Sendesymbolschätzer unabhängig davon, ob an seinem Eingang "harte" oder "weiche" Bits anliegen, an seinem Ausgang "weiche Symbole" bereitstellen. Bevorzugt liegen am Eingang des Sendesymbolschätzers "weiche" Bits an.

Beispielsweise kann der Datenempfänger bei manchen Ausführungsbeispielen ausgebildet sein, um die geschätzten codierten Bits (als Ergebnis der Teildecodierung) mit Zuverlässigkeitsinformation versehen, um basierend auf den geschätzten codierten Bits mit der Zuverlässigkeitsinformation, eine Zuverlässigkeitsinformation für die geschätzten Sendesymbole zu erhalten.

Bei Ausführungsbeispielen kann der Datenempfänger zumindest zwei Antennen aufweisen, wobei der Datenempfänger ausgebildet sein kann, um das Signal mit den zumindest zwei Antennen zu empfangen, um zumindest zwei Empfangssignale zu erhalten, wobei der Datenempfänger [oder der Demodulator/Demapper des Datenempfängers] ausgebildet sein kann, um Symbole der zumindest zwei Empfangssignale zu kombinieren [z.B. mittels Maximum Ratio Combining] und zu demodulieren.

Bei Ausführungsbeispielen können die zumindest zwei separaten Teil-Datenpakete in der Zeit und/oder in der Frequenz voneinander beabstandet sein.

Bei Ausführungsbeispielen können die zumindest zwei separaten Teil-Datenpakete [im OSI-Modell] Datenpaketen der Bitübertragungsschicht [physikalische Schicht] entsprechen.

Weitere Ausführungsbeispiele schaffen einen Datenempfänger zum Empfangen eines Signals, wobei das Signal zumindest zwei separate Teil-Datenpakete aufweist, wobei die zumindest zwei separaten Teil-Datenpakete (1/B)·(R·N) Symbole aufweisen, die R·N codierte Bits abbilden, die aus einer für die zumindest zwei separaten Teil-Datenpakete gemeinsam durchgeführten Redundanz einbringenden Codierung von N Datenbits mit einer Coderate von 1/R resultieren, wobei der Datenempfänger ausgebildet ist, um basierend auf dem empfangenen Signal einen Kanalzustand eines Übertragungskanals des Signals zu schätzen, um eine (k=1)-te Kanalzustandsinformation zu erhalten, wobei B die Anzahl an pro Symbol abgebildeten codierten Bits angibt, wobei der Datenempfänger ausgebildet ist, um in jedem Iterationsschritt k mit k=1 bis K einer Abfolge von K Iterationsschritten
- unter Verwendung der k-ten Kanalzustandsinformation einen k-ten Satz von empfangenen Symbolen aus verschiedenen Teil-Datenpaketen zu demodulieren, wobei der k-te Satz von empfangenen Symbolen eine echte Teilmenge der R·N empfangenen Symbole der zumindest zwei Teil-Datenpakete ist, um einen k-ten Satz von empfangenen codierten Bits zu erhalten, wobei der k-te Satz von empfangenen codierten Bits unter Ausnutzung der senderseitigen Redundanz einbringenden Codierung einen Rückschluss auf einen dem k-ten Satz von empfangenen codierten Bits senderseitig korrespondierenden k-ten Satz von codierten Bits ermöglicht,
- den k-ten Satz von empfangenen codierten Bits zu decodieren, um unter Ausnutzung der senderseitigen Redundanz einbringenden Codierung einen k-ten Satz von geschätzten codierten Bits zu ermitteln, und um den k-ten Satz von geschätzten Bits unter Verwendung einer mit einer senderseitigen Abbildungsvorschrift übereinstimmenden Abbildungsvorschrift auf geschätzte Sendesymbole abzubilden, um einen k-ten Satz von geschätzten Sendesymbolen zu erhalten;
- eine (k+1)-te Kanalzustandsinformation unter Verwendung des k-ten Satzes von geschätzten Sendesymbolen [und z.B. des (k-1)-ten Satzes von geschätzten Sendesymbolen] zu bestimmen.

Bei Ausführungsbeispielen kann R eine natürliche Zahl größer als eins sein. Selbstverständlich kann R auch eine nicht-natürliche Zahl sein, z.B. bei einer Punktierung.

Bei Ausführungsbeispielen kann N eine natürliche Zahl größer als eins sein.

Bei Ausführungsbeispielen kann K eine natürliche Zahl größer als eins sein.

Bei Ausführungsbeispielen kann B eine natürliche Zahl größer gleich eins sein.

Bei Ausführungsbeispielen kann der (k+1)-te Satz von empfangenen Symbolen in den jeweiligen Teil-Datenpaketen [z.B. unmittelbar] benachbart zu dem k-ten Satz von empfangenen Symbolen angeordnet sein.

Bei Ausführungsbeispielen kann der Datenempfänger ausgebildet sein, um basierend auf Pilotsymbolen der zumindest zwei separaten Teil-Datenpakete den Kanalzustand des Übertragungskanals zu schätzen, um die (k=1)-te Kanalzustandsinformation zu erhalten.

Weitere Ausführungsbeispiele schaffen ein Verfahren zum Empfangen eines Signals, wobei das Signal zumindest zwei separate Teil-Datenpakete aufweist, wobei die zumindest zwei separaten Teil-Datenpakete Symbole aufweisen, die codierte Bits abbilden, die aus einer für die zumindest zwei separaten Teil-Datenpakete gemeinsam durchgeführten Redundanz einbringenden Codierung einer Datenbitfolge resultieren. Das Verfahren umfasst einen Schritt des Schätzens eines Kanalzustands eines Übertragungskanals des Signals basierend auf dem empfangenen Signal, um eine erste Kanalzustandsinformation zu erhalten. Ferner umfasst das Verfahren einen Schritt des Demodulierens eines ersten Satzes von empfangenen Symbolen aus verschiedenen Teil-Datenpaketen unter Verwendung der ersten Kanalzustandsinformation, wobei der erste Satz von empfangenen Symbolen eine echte Teilmenge der empfangenen Symbole der zumindest zwei Teil-Datenpakete ist, um einen ersten Satz von empfangenen codierten Bits zu erhalten, wobei der erste Satz von empfangenen codierten Bits unter Ausnutzung der senderseitigen Redundanz einbringenden Codierung einen Rückschluss auf einen dem ersten Satz von empfangenen codierten Bits senderseitig korrespondierenden ersten Satz von codierten Bits ermöglicht. Ferner umfasst das Verfahren einen Schritt des Decodierens des ersten Satzes von empfangenen codierten Bits, um unter Ausnutzung der senderseitigen Redundanz einbringenden Codierung einen ersten Satz von geschätzten codierten Bits zu ermitteln. Ferner umfasst das Verfahren einen Schritt des Abbildens des ersten Satzes von geschätzten codierten Bits auf geschätzte Sendesymbole unter Verwendung einer mit einer senderseitigen Abbildungsvorschrift übereinstimmenden Abbildungsvorschrift, um einen ersten Satz von geschätzten Sendesymbolen zu erhalten. Ferner umfasst das Verfahren einen Schritt des Bestimmens einer zweiten Kanalzustandsinformation unter Verwendung des ersten Satzes von geschätzten Sendesymbolen.

Ausführungsbeispiele der vorliegenden Erfindung werden bezugnehmend auf die beiliegenden Figuren näher beschrieben. Es zeigen:
- Fig. 1: ein schematisches Blockschaltbild eines Systems mit einem Datensender und einem Datenempfänger mit einer iterativen Kanalschätzung;
- Fig. 2: ein schematisches Blockschaltbild eines Systems mit einem Datensender und einem Datenempfänger, gemäß einem Ausführungsbeispiel der vorliegenden Erfindung;
- Fig. 3: in einem Diagramm eine Belegung des Übertragungskanals bei der Übertragung einer Mehrzahl von Sub-Datenpaketen entsprechend einem Zeit- und Frequenzsprungmuster;
- Fig. 4: ein schematisches Blockschaltbild eines Datenempfängers mit iterativer Kanalschätzung, gemäß einem Ausführungsbeispiel der vorliegenden Erfindung;
- Fig. 5: ein schematisches Blockschalbild des Datenempfängers mit einer iterativen Kanalschätzung, gemäß einem Ausführungsbeispiel der vorliegenden Erfindung;
- Fig. 6: in einem Diagramm einen Kanalzustand aufgetragen über die Zeit sowie Ausschnitte des Empfangssignals und entsprechende geschätzte Sendesymbole für die Iterationsschritte k und k+1, gemäß einem Ausführungsbeispiel;
- Fig. 7: eine schematische Ansicht der Codierung einer Datenbitfolge zu codierten Bits unter Verwendung einer Faltungscodierung mit einer Coderate 1/(R=3) und der Abbildung der codierten Bits auf Sendesymbole, gemäß einem Ausführungsbeispiel;
- Fig. 8: eine schematische Ansicht eines Datenpakets mit N Datensymbolen;
- Fig. 9: eine schematische Ansicht von drei Teil-Datenpaketen, wobei die N Datensymbole auf die drei Teil-Datenpakete verschachtelt aufgeteilt sind, gemäß einem Ausführungsbeispiel;
- Fig. 10: eine schematische Ansicht von drei Teil-Datenpaketen, wobei die N Datensymbole auf die drei Teil-Datenpakete verschachtelt aufgeteilt sind, wobei die drei Teil-Datenpakete ferner M Präambelsymbole aufweisen, die ebenfalls auf die drei Teil-Datenpakete verschachtelt aufgeteilt sind und in den jeweiligen Teil-Datenpaketen den Datensymbolen vorangestellt sind, gemäß einem Ausführungsbeispiel;
- Fig. 11: eine schematische Ansicht von drei Teil-Datenpaketen, wobei die N Datensymbole auf die drei Teil-Datenpakete verschachtelt aufgeteilt sind, wobei die drei Teil-Datenpakete ferner M Präambelsymbole (Midambelsymbole) aufweisen, die ebenfalls auf die drei Teil-Datenpakete verschachtelt aufgeteilt sind und in den jeweiligen Teil-Datenpaketen in der Mitte zwischen den Datensymbolen angeordnet sind, gemäß einem Ausführungsbeispiel;
- Fig. 12: eine schematische Ansicht der Codierung einer beispielhaften Datenbitfolge mit 186 Bits, die mit Nullen zu einer Datenbitfolge mit 192 Bits aufgefüllt wird, zu einer Folge von 576 codierten Bits unter Verwendung einer Faltungscodierung mit einer Coderate 1/(R=3) sowie einer zyklischen Verschiebung der letzten 48 Bits der Folge von 576 codierten Bits an den Anfang der Folge von 576 codierten Bits, um eine zyklisch verschobene Folge von 576 codierten Bits zu erhalten, gemäß einem Ausführungsbeispiel;
- Fig. 13: eine schematische Ansicht von 24 Teil-Datenpaketen, wobei die 576 codierten Bits der zyklisch verschobenen Datenbitfolge (C₅₂₈, C₅₂₉, C₅₃₀, ..., C₅₇₅, C₀, C₁, C₂, c₃, ...c₅₂₇) 153 auf die 24 Teil-Datenpakete 142 verschachtelt aufgeteilt sind, wobei die 24 Teil-Datenpakete 142 ferner jeweils 12 Präambelsymbole (Midambelsymbole) 144 (p₀, p₁, p₂, p₃, ..., p₁₁) aufweisen und in den jeweiligen Teil-Datenpaketen 142 in der Mitte zwischen den Datensymbolen 146 angeordnet sind, gemäß einem Ausführungsbeispiel; und
- Fig. 14: ein Flussdiagramm eines Verfahrens zum Empfangen eines Signals gemäß einem Ausführungsbeispiel.

In der nachfolgenden Beschreibung der Ausführungsbeispiele der vorliegenden Erfindung werden in den Figuren gleiche oder gleichwirkende Elemente mit dem gleichen Bezugszeichen versehen, sodass deren Beschreibung untereinander austauschbar ist.

In der folgenden Beschreibung der Ausführungsbeispiele der vorliegenden Erfindung wird zur Vermeidung von Doppeldeutigkeiten zwischen den Begriffen "Kanalschätzung" und "Kanalzustandsschätzung" unterschieden. So wird bei Ausführungsbeispielen als symbolgestützte Kanalzustandsschätzung ein einzelner Verarbeitungsschritt im Gesamtkontext einer Kanalschätzung bezeichnet, welcher beispielsweise aus einem geeigneten Ausschnitt eines Empfangssignals und/oder einer Folge (z.B. geschätzter oder vorab bekannter) Sendesymbole den (z.B. instantanen) Zustand eines Übertragungskanals z.B. zu einem gewünschten Zeitpunkt schätzt. Ferner bezieht sich bei Ausführungsbeispielen der Begriff Kanalschätzung auf ein Verfahren mit mehreren Verarbeitungsschritten, welches die Schätzung eines unbekannten Übertragungskanals (zu ggf. vielen unterschiedlichen Zeitpunkten) zum Ziel hat und welches als einen spezifischen Verfahrensschritt die Kanalzustandsschätzung mit beinhaltet.

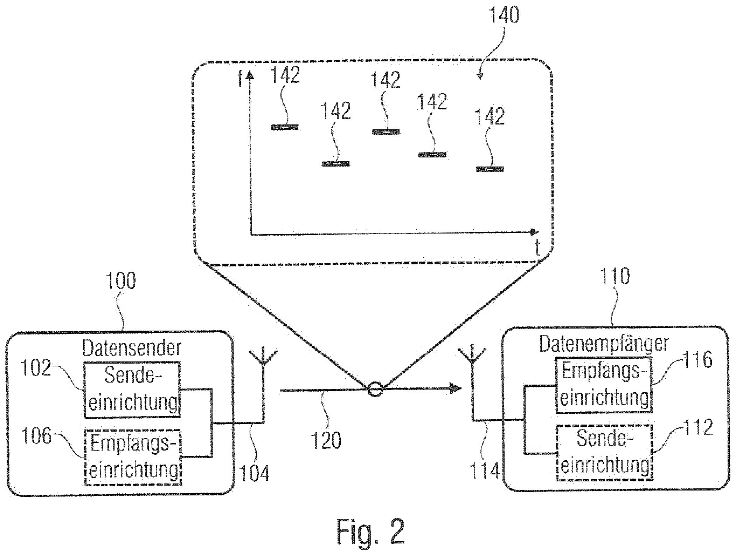

Fig. 2 zeigt ein schematisches Blockschaltbild eines Systems mit einem Datensender 100 und einem Datenempfänger 110. Der Datensender 100 kann ausgebildet sein, um ein Signal 120 zu senden, wobei das Signal 120 zumindest zwei separate Teil-Datenpakete 142 aufweist. Der Datenempfänger 110 kann ausgebildet sein, um das Signal 120 (oder eine durch den Übertragungskanal modifizierte Version des Signals 120)) zu empfangen, welches die zumindest zwei separaten Teil-Datenpakete 142 aufweist.

Wie in Fig. 2 zu erkennen ist, sind die zumindest zwei separaten Teil-Datenpakete 142 in der Zeit und/oder in der Frequenz voneinander separiert bzw. beabstandet. Die Verteilung der zumindest zwei separaten Teil-Datenpakete 142 in der Zeit und/oder Frequenz kann entsprechend eines Sprungmusters (engl. hopping pattern) 140 erfolgen.

Bei Ausführungsbeispielen kann der Datensender 100 eine Sendeeinrichtung (oder Sendemodul, oder Transmitter) 102 aufweisen, die ausgebildet ist, um das Signal 120 zu senden. Die Sendeeinrichtung 102 kann mit einer Antenne 104 des Datensenders 100 verbunden sein. Der Datensender 100 kann ferner eine Empfangseinrichtung (oder Empfangsmodul, oder Receiver) 106 aufweisen, die ausgebildet ist, um ein Signal zu empfangen. Die Empfangseinrichtung 106 kann mit der Antenne 104 oder einer weiteren (separaten) Antenne des Datensenders 100 verbunden sein. Der Datensender 100 kann auch eine kombinierte Sendeempfangseinrichtung (Transceiver) aufweisen.

Bei Ausführungsbeispielen kann der Datenempfänger 110 kann eine Empfangseinrichtung (oder Empfangsmodul, oder Receiver) 116 aufweisen, die ausgebildet ist, um das Signal 120 zu empfangen. Die Empfangseinrichtung 116 kann mit einer Antenne 114 des Datenempfängers 110 verbunden sein. Ferner kann der Datenempfänger 110 eine Sendeeinrichtung (oder Sendemodul, oder Transmitter) 112 aufweisen, die ausgebildet ist, um ein Signal zu senden. Die Sendeeinrichtung 112 kann mit der Antenne 114 oder einer weiteren (separaten) Antenne des Datenempfängers 110 verbunden sein. Der Datenempfänger 110 kann auch eine kombinierte Sendeempfangseinrichtung (Transceiver) aufweisen.

Bei Ausführungsbeispielen kann der Datensender 100 ein Sensorknoten sein, während der Datenempfänger 110 eine Basisstation sein kann. Typischerweise umfasst ein Kommunikationssystem zumindest einen Datenempfänger 110 (Basisstation) und eine Vielzahl von Datensendern (Sensorknoten, wie z.B. Heizungszähler). Natürlich ist es auch möglich, dass der Datensender 100 eine Basisstation ist, während der Datenempfänger 110 ein Sensorknoten ist. Ferner ist es möglich, dass sowohl der Datensender 100 als auch der Datenempfänger 110 Sensorknoten sind. Des Weiteren ist es möglich, dass sowohl der Datensender 100 als auch der Datenempfänger 110 Basisstationen sind.

Der Datensender 100 und der Datenempfänger 110 können ausgebildet sein, um Daten unter Verwendung eines Telegram-Splitting-Verfahrens (dt. Telegrammaufteilungsverfahrens) zu senden bzw. zu empfangen. Hierbei wird ein die Daten aufweisendes Datenpaket (oder Telegramm) in eine Mehrzahl von Teil-Datenpakete (oder Sub-Datenpakte) 142 aufgeteilt und die Teil-Datenpakete 142 entsprechend eines Sprungmusters 140 in der Zeit verteilt und/oder in der Frequenz verteilt von dem Datensender 100 zu dem Datenempfänger 110 übertragen, wobei der Datenempfänger 110 die Teil-Datenpakete 142 wieder zusammenfügt (oder kombiniert), um das eigentliche Datenpaket zu erhalten. Jedes der Teil-Datenpakete 142 enthält dabei nur einen Teil des Datenpakets 120. Das Datenpaket kann ferner kanalcodiert sein, so dass zum fehlerfreien Decodieren des Datenpakets nicht alle Teil-Datenpakete 142 sondern nur ein Teil der Teil-Datenpakete 142 erforderlich ist.

Die zeitliche Verteilung der Mehrzahl von Teil-Datenpaketen 142 kann, wie bereits erwähnt, entsprechend eines Zeit- und/oder Frequenzsprungmusters 140 erfolgen.

Ein Zeitsprungmuster kann eine Abfolge von Sendezeitpunkten oder Sendezeitabständen angeben, mit denen die Teil-Datenpakete gesendet werden. Beispielsweise kann ein erstes Teil-Datenpaket zu einem ersten Sendezeitpunkt (oder in einem ersten Sendezeitschlitz) und ein zweites Teil-Datenpaket zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben. Zwischen den Teil-Datenpaketen können Sendepausen vorhanden sein in denen nicht gesendet wird. Die Teil-Datenpakete können sich auch zeitlich überlappen (überschneiden).

Ein Frequenzsprungmuster kann eine Abfolge von Sendefrequenzen oder Sendefrequenzsprüngen angeben, mit denen die Teil-Datenpakete gesendet werden. Beispielsweise kann ein erstes Teil-Datenpaket mit einer ersten Sendefrequenz (oder in einem ersten Frequenzkanal) und ein zweites Teil-Datenpaket mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Natürlich können die Mehrzahl von Teil-Datenpaketen 142 auch sowohl in der Zeit- als auch in der Frequenz verteilt von dem Datensender 100 zu dem Datenempfänger 110 übertragen werden. Die Verteilung der Mehrzahl von Teil-Datenpaketen in der Zeit und in der Frequenz kann entsprechend einem Zeit- und Frequenzsprungmuster erfolgen. Ein Zeit- und Frequenzsprungmuster kann die Kombination aus einem Zeitsprungmuster und einem Frequenzsprungmuster sein, d.h. eine Abfolge von Sendezeitpunkten oder Sendezeitabständen mit denen die Teil-Datenpakete 142 übertragen werden, wobei den Sendezeitpunkten (oder Sendezeitabständen) Sendefrequenzen (oder Sendefrequenzsprünge) zugeordnet sind.

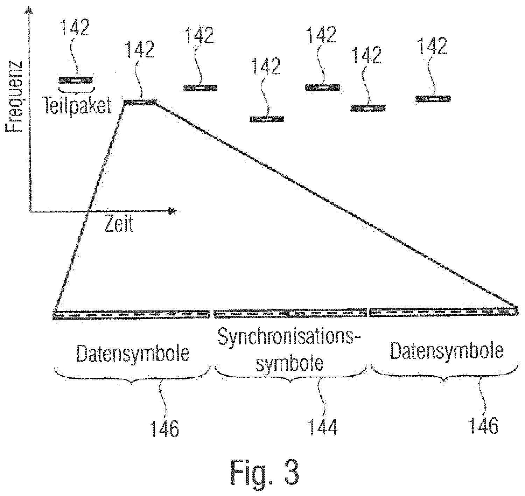

Fig. 3 zeigt in einem Diagramm eine Belegung des Übertragungskanals bei der Übertragung einer Mehrzahl von Teil-Datenpaketen 142 entsprechend einem Zeit- und Frequenzsprungmuster. Dabei beschreibt die Ordinate die Frequenz und die Abszisse die Zeit.

Wie in Fig. 3 zu erkennen ist, kann das Datenpaket 120 beispielhaft auf n = 7 Teil-Datenpakete 142 aufgeteilt werden und entsprechend eines Zeit- und Frequenzsprungmusters verteilt in der Zeit und der Frequenz von dem Datensender 100 zu dem Datenempfänger 110 übertragen werden.

Wie in Fig. 3 weiter zu erkennen ist, können die Mehrzahl von Teil-Datenpaketen 142 neben Daten (Datensymbole 146 in Fig. 3) auch Pilotsequenzen (Pilotsymbole (oder Synchronisationssymbole) 144 in Fig. 3) enthalten. Je nach zeitlicher Position innerhalb der Teil-Datenpakete werden diese auch als Präambel (der Sequenz von Datensymbolen vorangestellt) oder Midambel (zwischen Sequenzen von Datensymbolen eingebettet) bezeichnet.

Im Folgenden werden detaillierte Ausführungsbeispiele des Datenempfängers 110 mit einer iterativen Kanalschätzung näher beschrieben.

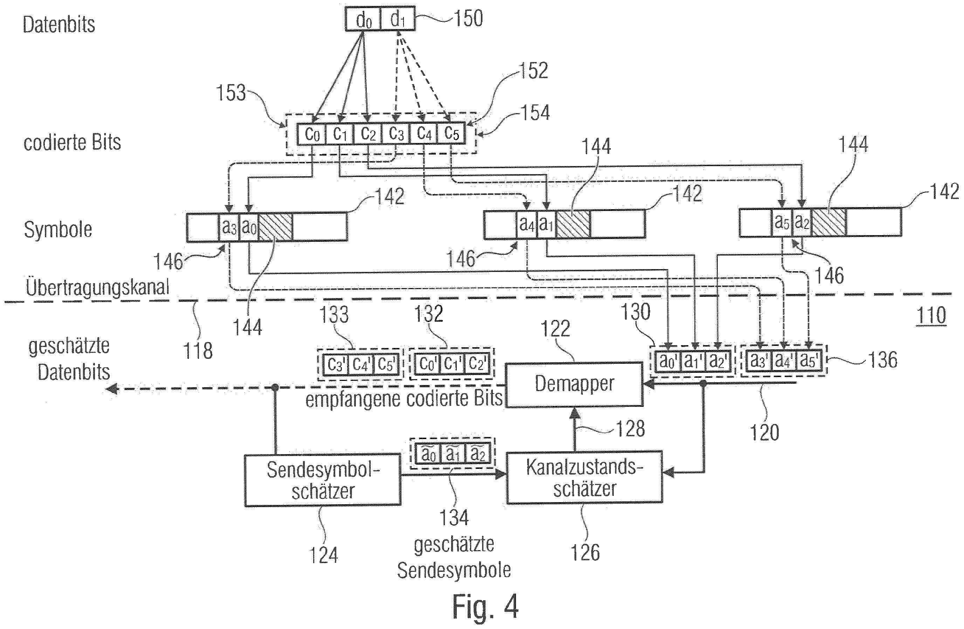

Fig. 4 zeigt ein schematisches Blockschaltbild eines Datenempfängers 110 mit iterativer Kanalschätzung, gemäß einem Ausführungsbeispiel der vorliegenden Erfindung. Der Datenempfänger 110 ist ausgebildet, um ein Signal 120 (z.B. von dem Datensender 100 (siehe Fig. 2)) zu empfangen, wobei das Signal 120 zumindest zwei separate Teil-Datenpakete 142 aufweist, wobei die zumindest zwei separaten Teil-Datenpakete 142 Symbole 146 (a₀, a₁, a₂, a₃, a₄, a₅, a₆, ..., a_{M·N}) aufweisen, die codierte Bits 152 (c₀, c₁, c₂, c₃, c₄, c₅, c₆, ..., c_{M·N}) abbilden, die aus einer für die zumindest zwei separaten Teil-Datenpakete 142 gemeinsam durchgeführten Redundanz einbringenden Codierung (z.B. mit einer Coderate von 1/R) einer Datenbitfolge 150 (d₀, d₁, ..., d_{N}) resultieren. Bei Ausführungsbeispielen können R und N natürliche Zahlen größer Eins sein.

Wie in Fig. 4 beispielhaft gezeigt ist, kann der Datenempfänger 110 einen Demodulator (z.B. einen Symbolrückabbilder (engl. symbol demapper)) 122, einen Sendesymbolschätzer 124 und einen Kanalzustandsschätzer 126 aufweisen. Natürlich kann der Datenempfänger 110 auch mittels eines Prozessors, Mikroprozessors oder einer anderen programmierbaren logischen Schaltung implementiert sein, wobei in diesem Fall die in Fig. 4 gezeigten Schaltungsblöcke beispielsweise durch entsprechende Algorithmen implementiert sein können.

Bei Ausführungsbeispielen kann der Kanalzustandsschätzer 126 ausgebildet sein, um basierend auf dem empfangenen Signal 120 einen Kanalzustand eines Übertragungskanals 118 des Signals 120 zu schätzen, um eine erste Kanalzustandsinformation 128 zu erhalten.

Beispielsweise kann der Kanalzustandsschätzer 126 ausgebildet sein, um zunächst (d.h. in einem ersten Iterationsschritt (k=1)) basierend auf Pilotsymbolen 144 der zumindest zwei separaten Teil-Datenpakete 142 den Kanalzustand des Übertragungskanals 118 zu schätzen, um die erste Kanalzustandsinformation 128 zu erhalten.

Bei Ausführungsbeispielen kann der Demodulator 122 ausgebildet sein, um unter Verwendung der ersten Kanalzustandsinformation 128 einen ersten Satz von empfangenen Symbolen 132 (a₀', a₁', a₂') aus verschiedenen Teil-Datenpaketen 142 zu demodulieren, wobei der erste Satz von empfangenen Symbolen 130 (a₀', a₁', a₂') eine echte Teilmenge der empfangenen Symbole 146' (a₀', a₁', a₂', a₃', a₄', a₅', a₆', ..., a_{R·N-1}') der zumindest zwei separaten Teil-Datenpakte 142 ist, um einen ersten Satz von empfangenen codierten Bits 132 (c₀', c₁', c₂') zu erhalten.

Beispielsweise kann der erste Satz von empfangenen Symbolen 130 (a₀', a₁', a₂') so gewählt sein, dass er eine Rekonstruktion des ersten Satzes von empfangenen codierten Bits 132 (c₀', c₁', c₂') ermöglicht.

Bei Ausführungsbeispielen kann der erste Satz von empfangenen codierten Bits 132 (c₀', c₁', c₂') (z.B. für sich genommen (z.B. unabhängig von anderen empfangenen Symbolen und/oder unabhängig von anderen empfangenen codierten Bits)) unter Ausnutzung der senderseitigen Redundanz einbringenden Codierung einen Rückschluss auf einen dem ersten Satz von empfangenen codierten Bits 132 (c₀', c₁', c₂') senderseitig korrespondierenden bzw. entsprechenden ersten Satz von codierten Bits 153 (c₀, c₁, c₂) ermöglichen.

Beispielsweise kann der erste Satz von senderseitig codierten Bits 153 (c₀, c₁, c₂) senderseitig auf einen ersten Satz von Symbolen (a₀, a₁, a₂) abgebildet werden, wobei der erste Satz von empfangenen Symbolen 130 (a₀', a₁', a₂') die vom Datenempfänger 110 empfangene Version des ersten Satzes von Symbolen (a₀, a₁, a₂) ist.

Beispielsweise kann der erste Satz von empfangenen codierten Bits 132 (c₀', c₁', c₂') (z.B. unabhängig von anderen empfangenen Symbolen und/oder unabhängig von anderen empfangenen codierten Bits)) einen Rückschluss auf zumindest ein zu übertragendes erstes Datenbit 150 (do) unter Ausnutzung eines Codierungsgewinns ermöglichen (z.B. eine Teildecodierung der Sendesequenz mit Erzielung eines Codierungsgewinns ermöglichen).

Bei Ausführungsbeispielen kann der Sendesymbolschätzer 124 ausgebildet sein, um den ersten Satz von empfangenen codierten Bits 132 (c₀', c₁', c₂') zu decodieren (z.B. unabhängig von anderen in den zumindest zwei separaten Teil-Datenpaketen 142 enthaltenen codierten Datenbits (Teildecodierung)), um unter Ausnutzung der senderseitigen Redundanz einbringenden Codierung einen ersten Satz von geschätzten codierten Bits zu ermitteln (z.B. einen ersten Satz von codierten Bits, die am wahrscheinlichsten den senderseitigen codierten Bits 153 (c₀, c₁, c₂) entsprechen, zumindest aber mit größerer Wahrscheinlichkeit als die empfangenen codierten Bits 132 (c₀', c₁', c₂')), und um den ersten Satz von geschätzten Bits unter Verwendung einer mit einer senderseitigen Abbildungsvorschrift übereinstimmenden Abbildungsvorschrift auf geschätzte Sendesymbole abzubilden, um einen ersten Satz von geschätzten Sendesymbolen 134 (ã₀, ã₁, ã₂) zu erhalten.

Beispielsweise kann der Sendesymbolschätzer 124 ausgebildet sein, um den ersten Satz von empfangenen codierten Bits 132 (c₀', c₁', c₂') zu decodieren, um einen Schätzwert für das zumindest erste Datenbit 150 (d₀) zu erhalten, und um das geschätzte zumindest erste Datenbit 150 (d₀) zu re-encodieren, um den ersten Satz von geschätzten Bits zu erhalten.

Beispielsweise kann der der Sendesymbolschätzer 124 ausgebildet sein, um bei senderseitig angewandter Faltungscodierung einen Viterbi Decoder zur Teildecodierung der empfangenen codierten Bits 132 (c₀', c₁', c₂') einzusetzen, wobei im Zuge der Teildecodierung der wahrscheinlichste Pfad im Trellis-Diagramm ermittelt wird und die mit diesem Pfad assoziierten codierten Bits als ersten Satz von geschätzten Bits zu erhalten.

Bei Ausführungsbeispielen kann der Kanalzustandsschätzer 126 ferner ausgebildet sein, um (z.B. in einem zweiten Iterationsschritt (k+1=2)) eine zweite Kanalzustandsinformation 128 (z.B. eine aktualisierte oder eine erweiterte Kanalzustandsinformation) unter Verwendung des ersten Satzes von geschätzten Sendesymbolen 134 (ã₀, ã₁, ã₂) zu bestimmen, wobei der erste Satz von geschätzten Sendesymbolen 134 (ã₀, ã₁, ã₂) [im Falle einer gestörten Übertragung] mit höherer Wahrscheinlichkeit dem ersten Satz von gesendeten Symbolen 146 (a₀, a₁, a₂) entspricht als die empfangenen Symbole 130 (a₀', a₁', a₂').

Beispielsweise kann der Kanalzustandsschätzer 126 ausgebildet sein, um den Kanalzustand unter Verwendung des ersten Satzes von geschätzten Sendesymbolen 134 (ã₀, ã₁, ã₂) (und z.B. unter Verwendung eines vorherigen Satzes von geschätzten Sendesymbolen und/oder unter Verwendung von Pilotsymbolen 144) zu schätzen, um die zweite Kanalzustandsinformation 128 zu erhalten.

Bei Ausführungsbeispielen kann der Demodulator 122 ferner ausgebildet ist, um (z.B. in dem zweiten Iterationsschritt (k+1=2)) unter Verwendung der zweiten Kanalzustandsinformation 128 einen zweiten Satz von empfangenen Symbolen 136 (a₃', a₄', a₅') aus verschiedenen Teil-Datenpaketen 142 zu demodulieren, wobei der zweite Satz von empfangenen Symbolen 136 (a₃', a₄', a₅') eine echte Teilmenge der empfangenen Symbole 146' (a₀', a₁', a₂', a₃', a₄', a₅', a₆', ..., a_{R·N-1}') der zumindest zwei Teil-Datenpakete 142 ist, um einen zweiten Satz von empfangenen codierten Bits 133 (c₃', c₄', c₅') zu erhalten.

Bei Ausführungsbeispielen kann der zweite Satz von empfangenen codierten Bits 133 (c₃', c₄', c₅') (z.B. für sich genommen (z.B. unabhängig von anderen empfangenen Symbolen und/oder unabhängig von anderen empfangenen codierten Bits)) unter Ausnutzung der senderseitigen Redundanz einbringenden Codierung einen Rückschluss auf einen dem zweiten Satz von empfangenen codierten Bits 133 (c₃', c₄', c₅') senderseitig korrespondierenden bzw. entsprechenden zweiten Satz von codierten Bits 154 (c₃, c₄, c₅) ermöglichen.

Wie in Fig. 4 zu erkennen ist, kann bei Ausführungsbeispielen der erste Satz von empfangenen Symbolen 130 (a₀', a₁', a₂') in den jeweiligen Teil-Datenpakten 142 [z.B. unmittelbar] benachbart zu Pilotsymbolen 144 der zumindest zwei separaten Teil-Datenpakete 142 angeordnet sein, während der zweite Satz von empfangenen Symbolen 136 (a₃', a₄', a₅') in den jeweiligen Teil-Datenpaketen 142 einen zeitlich größeren Abstand zu Pilotsymbolen 144 der zumindest zwei separaten Teil-Datenpakete 142 aufweist als der erste Satz von empfangenen Symbolen 130 (a₀', a₁', a₂'). Beispielsweise kann der zweite Satz von empfangenen Symbolen 136 (a₃', a₄', a₅') in den jeweiligen Teil-Datenpaketen 142 [z.B. unmittelbar] benachbart zu dem ersten Satz von empfangenen Symbolen 130 (a₀', a₁', a₂') angeordnet sein.

Der vorliegenden Erfindung liegt die Idee zugrunde, den durch die Kanalcodierung (z.B. in Form von eingebrachter Redundanz) erzielbaren Codierungsgewinn oder zumindest eines Teils davon bereits für die iterative Kanalschätzung zu nutzen. Anders als bei dem in Fig. 1 gezeigten Datenempfänger, werden bei Ausführungsbeispielen die für die Kanalzustandsschätzung benötigten Schätzwerte der Sendesymbole 134 dadurch gewonnen, dass in zusätzlichen Decodiervorgängen fortlaufend (iterativ) eine Teildecodierung der gesendeten Nachricht erfolgt. Der Begriff "Teildecodierung" bedeutet, dass nur der Teil der Nachricht decodiert wird, dessen Decodierung auf Basis der zum jeweiligen Zeitpunkt der Teildecodierung vorliegenden Empfangssymbole 130, 136 möglich ist.

Im Anschluss an die Teildecodierung, welche als Ergebnis geschätzte codierte Bits liefert, erfolgt wie beim Sender eine Verschachtelung (engl. interleaving) und Symbolabbildung (engl. symbol mapping) derselben, welche auf Basis des Teildecodier-Ergebnisses die geschätzten Sendesymbole 134 generiert.

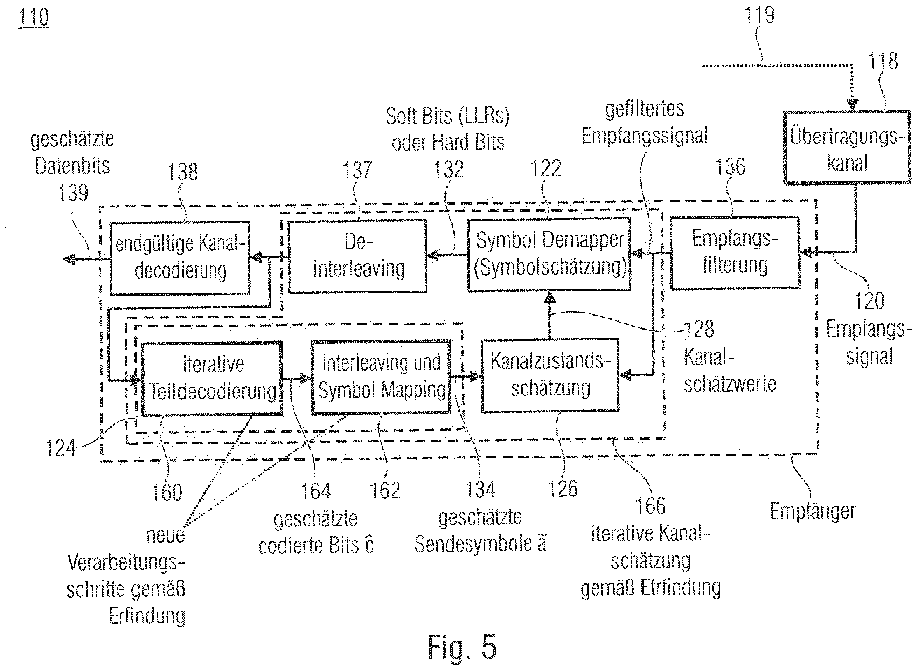

Im Folgenden wird anhand von Fig. 5 ein detailliertes Ausführungsbeispiel des Datenempfängers 100 näher beschrieben.

Fig. 5 zeigt ein schematisches Blockschalbild des Datenempfängers mit einer iterativen Kanalschätzung, gemäß einem Ausführungsbeispiel der vorliegenden Erfindung. Mit anderen Worten, Fig. 5 zeigt exemplarisch die Struktur des gemäß einem Ausführungsbeispiel modifizierten Empfängers des Übertragungssystems.

Wie in Fig. 5 zu erkennen ist, kann der Datenempfänger 110 ausgebildet sein, um ein Signal (Empfangssignal) 120 zu empfangen, wobei das Empfangssignal 120 eine durch den Übertragungskanal 118 modifizierte Version eines Sendesignals 119 eines Datensenders sein kann. Der Datenempfänger 110 kann den Symbolrückabbilder (engl. symbol demapper) 122 umfassen, der ausgebildet sein kann, um basierend auf dem Empfangssignal 120 und unter Verwendung der Kanalzustandsinformation (Kanalschätzwerte) 128 eine Symbolschätzung durchzuführen, um einen Satz von empfangenen codierten Bits 132 bereitzustellen. Ferner kann der Datenempfänger 110 den Sendesymbolschätzer 124 umfassen, der ausgebildet sein kann, um basierend auf dem Satz von empfangenen codierten Bits 132 einen Satz von geschätzten codierten Bits (= Bits, die am wahrscheinlichsten den senderseitigen codierten Bits entsprechen) zu ermitteln, und um den Satz von geschätzten codierten Bits auf Sendesymbole abzubilden, um einen Satz von geschätzten Sendesymbolen 134 zu erhalten. Ferner kann der Datenempfänger 110 den Kanalzustandsschätzer 126 umfassen, der ausgebildet sein kann, um die Kanalzustandsinformation (Kanalschätzwerte) 128 unter Verwendung des Satzes von geschätzten Sendesymbolen 134 zu aktualisieren.

Wie in Fig. 5 ferner zu erkennen ist, kann der Datenempfänger 110 bei Ausführungsbeispielen einen Empfangsfilter 136, einen Entschachteler (engl. de-interleaver) 137 und einen Kanaldecodierer 138 aufweisen. Der Kanaldecodierer 138 kann ausgebildet sein kann, um eine endgültige Kanaldecodierung durchzuführen, um geschätzte Datenbits 139 bereitzustellen.

Optional kann der Symbolrückabbilder 122 einen Entzerrer aufweisen, der ausgebildet sein kann, um das gefilterte Empfangssignal zu entzerren.

Bei Ausführungsbeispielen kann der Sendesymbolschätzer 124 einen iterativen Teildecodierer 160 und einen Verschachteler und Symbolabbilder (engl. symbol mapper) 162 aufweisen. Der iterative Teildecodierer kann ausgebildet sein, um einen Satz von empfangenen codierten Bits (oder eine entschachtelte (engl. de-interleaved) Version davon) zu decodieren, um unter Ausnutzung der senderseitigen Redundanz einbringenden Codierung einen Satz von geschätzten codierten Bits 164 zu ermitteln. Der Verschachteler und Symbolabbilder 162 kann ausgebildet sein, um den Satz von geschätzten Bits 164 unter Verwendung einer mit einer senderseitigen Abbildungsvorschrift übereinstimmenden Abbildungsvorschrift zu verschachteln und auf geschätzte Sendesymbole abzubilden, um einen Satz von geschätzten Sendesymbolen 134 zu erhalten.

Bei Ausführungsbeispielen kann - je nach Implementierung des Übertragungssystems - die Reihenfolge von Verschachtelung (engl. interleaving) und Symbolabbildung (engl. symbol mapping) vertauscht sein, d.h. die Verschachtelung kann auf Bit- oder Symbolebene erfolgen. Dies ist für die Anwendung und den Nutzen von Ausführungsbeispielen nicht relevant, sodass hier nur einer der beiden Fälle exemplarisch betrachtet wird.

Die durch den Vorgang der Teildecodierung gewonnenen Schätzwerte der Sendesymbole 134 (ä) weisen bei Übertragung über einen gestörten Kanal eine geringere Fehlerrate auf als diejenigen aus einem Symbolschätzer nach dem Stand der Technik (siehe Fig. 1).

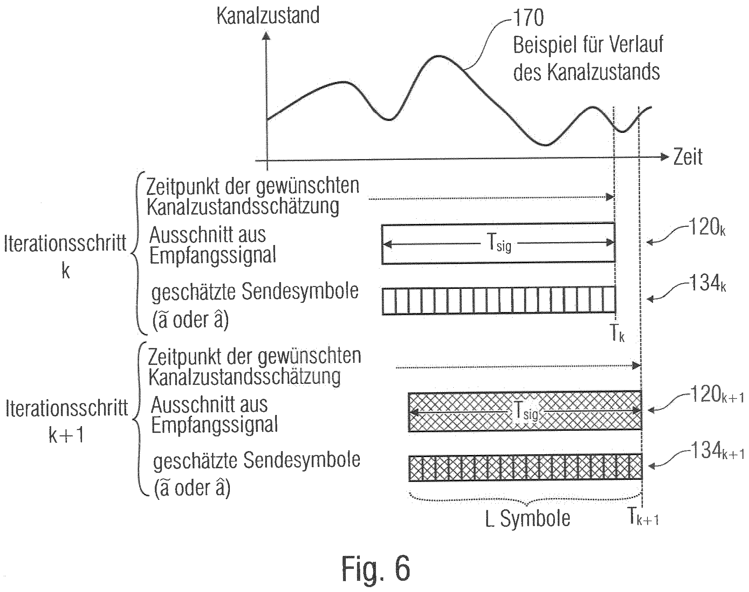

Zum besseren Verständnis der weiteren Ausführungen wird kurz das grundlegende Funktionsprinzip der symbolgestützten iterativen Kanalschätzung erläutert. Bei der symbolgestützten iterativen Kanalschätzung wird der Kanalzustand zu einem gewünschten Zeitpunkt Tₖ typischerweise auf Basis eines geeigneten Empfangssignal-Ausschnittes der Dauer T_{sig} sowie einer Folge der Länge L zeitlich zugehöriger geschätzter Sendesymbole geschätzt. Dies ist in Fig. 6 exemplarisch skizziert.

Im Detail zeigt Fig. 6 in einem Diagramm einen Kanalzustand 170 aufgetragen über die Zeit sowie Ausschnitte des Empfangssignals 120ₖ und 120ₖ₊₁ und entsprechende geschätzte Sendesymbole 134ₖ und 134ₖ₊₁ für die Iterationsschritte k und k+1. Mit anderen Worten, Fig. 6 zeigt ein Prinzip der iterativen Kanalschätzung sowie eine beispielhafte Darstellung der Iterationsschritte k und k+1.

Der Zeitpunkt Tₖ, zu welchem der Kanal in Iterationsschritt k geschätzt werden soll, kann sowohl am Rande (wie hier dargestellt) als auch außerhalb des zur Kanalzustandsschätzung verwendeten Signalausschnitts liegen. Der zeitliche Abstand zwischen zwei aufeinanderfolgenden Iterationsschritten (Tₖ₊₁₋Tₖ) beträgt typischerweise ein ganzzahliges Vielfaches der Symboldauer Tₛ.

Die Parameter der iterativen Kanalschätzung, wie z.B. (Tₖ₊₁-Tₖ)/Tₛ, T_{sig}, L, sowie das genaue Verfahren können durch die Parameter und den jeweiligen Arbeitspunkt des Übertragungssystems bestimmt werden, wie z.B. die Höhe und Art der Störung durch Rauschen und Interferenz (Eₛ/N₀, Signal-zu-Störleistungsverhältnis CIR) sowie die Geschwindigkeit des sich verändernden Kanals (bei Mobilfunkkanälen z.B. die Doppler-Spreizung).

Für die bestmögliche Funktion der symbolgestützten iterativen Kanalschätzung ist insbesondere bei stark zeitvarianten Kanälen anzustreben, dass
(1) die zur Kanalschätzung herangezogenen, geschätzten Sendesymbole als lückenlose, d.h. zeitlich aufeinanderfolgende Sequenz zur Verfügung steht,
(2) das letzte geschätzte Sendesymbol zeitlich möglichst nahe an den gewünschten Zeitpunkt der Kanalschätzung heranreicht (geringe Latenz) und
(3) die geschätzten Sendesymbole eine möglichst hohe Zuverlässigkeit bzw. niedrige Fehlerrate aufweisen.

Aus den Punkten (1) und (2) ergeben sich bestimmte Anforderungen an die Struktur der Kanalcodierung (z.B. FEC), welche bei der decodergestützten Kanalschätzung (z.B. stets) gemeinsam mit dem nachfolgenden Verschachteler (engl. interleaver) zu betrachten ist. So kann der Decoder 160 zum Abschluss des k-ten Iterationsschritts Schätzwerte aller für die Kanalschätzung im Iterationsschritt (k+1) nötigen L(=(1/B)·(R·N)) Sendesymbole 146 bereitstellen.

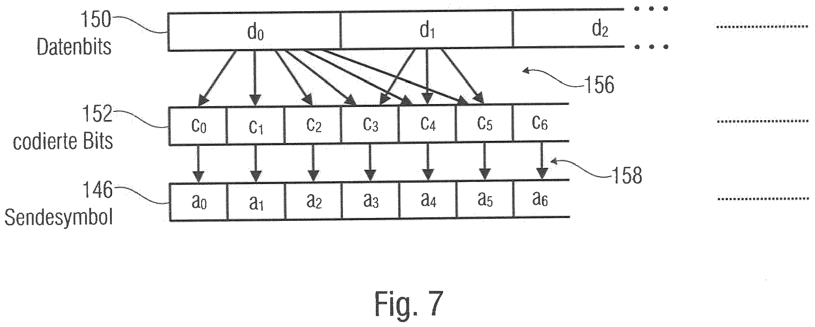

Zur Veranschaulichung dient zunächst ein einfaches Beispiel, in welchem für die Kanalcodierung (z.B. FEC) eine konventionelle Faltungscodierung mit Coderate 1/(R=3) und binärer Symbolzuordnung (BPSK Symbol Mapping) angenommen wird, wie dies in Fig. 7 beispielhaft veranschaulicht wird. Der Interleaver entfällt in diesem Beispiel.

Im Detail zeigt Fig. 7 eine schematische Ansicht der Codierung einer Datenbitfolge 150 (do, d₁, d₂, ..., d_{N-1}) zu einer Folge codierter Bits 152 (c₀, c₁, c₂, c₃, ...c_{R·N-1}) unter Verwendung einer Faltungscodierung mit einer Coderate 1/(R=3) und der Abbildung der Folge von codierten Bits 152 (c₀, c₁, c₂, c₃, ...c_{R·N-1}) auf Sendesymbole 146 (a₀, a₁, a₂, a₃, ... a_{R·N-1}). Mit anderen Worten, Fig. 7 zeigt Datenbits und Sendesymbole bei 1/(R=3)-ratiger Faltungscodierung und BPSK-Abbildung, wobei die Verbindungslinien 156 und 158 in Fig. 7 Abhängigkeiten symbolisieren.

In Fig. 7 ist veranschaulicht, dass der Inhalt der Sendesymbole a₀, a₁, a₂ (146) lediglich vom (i.d.R. bekannten) Anfangszustand des Faltungsencoders sowie dem ersten zu codierenden Datenbit d₀ (150) abhängt. Der Inhalt der Sendesymbole a₃, a₄, a₅ (146) hängt von den ersten beiden Datenbits d₀, d₁ (150) ab, der Inhalt der Sendesymbole a₆, a₇, a₈ (146) hängt von den ersten drei Datenbits d₀, d₁, d₂ (150) ab usw. Dies bedeutet, dass im gewählten Beispiel der zur Decodierung eines Faltungscodes typischerweise eingesetzte Viterbi-Decoder (frühestens) nach den jeweils ersten 3·N empfangenen Symbolen eine Entscheidung über die ersten N Datenbits treffen kann. Gleichwohl kann die Zuverlässigkeit der Teildecodierung verbessert werden, indem zur Entscheidung der ersten N Datenbits mehr als 3·N empfangene Symbole verarbeitet werden. Dieser Aspekt wird an späterer Stelle nochmals aufgegriffen.

Zur Entscheidung über die ersten N Datenbits d₀...d_{N-1} benötigt der Decoder am Eingang sog. weiche Bits (engl. soft bits) (z.B. LLRs) oder harte Bits (engl. hard bits) aus dem Symbolrückabbilder (engl. symbol demapper) 122, welche sich bei der angenommenen BPSK-Abbildung direkt aus Schätzwerten â₀...â_{3N-1} (134) für die Sendesymbole ableiten lassen (siehe Fig. 5). Im Zuge der Teildecodierung kann der Decoder 160 eine in jedem Iterationsschritt neuerliche Entscheidung über die mit größter Wahrscheinlichkeit gesendete Teil-Datenbitsequenz treffen. Aufgrund der durch die Kanalcodierung (z.B. FEC) eingebrachten Redundanz kann sich nach dem Teildecodiervorgang mit anschließendem Verschachteln (engl. interleaving) und Symbolabbildung (engl. symbol mapping) eine andere Symbolsequenz ã₀...ã_{3N-1} (Satz von geschätzten Symbolen 134) als wahrscheinlicher erweisen als die vom Symbolrückabbilder (engl. symbol demapper) 122 geschätzte Sequenz â₀...â_{3N-1} (Satz von empfangenen Symbolen). Aufgrund des Decodiergewinns ist die aus der Teildecodierung abgeleitete Sequenz ä (134) zuverlässiger als die vom Symbolrückabbilder 122 geschätzte Sequenz ä und wird daher als Eingangsgröße für den Kanalzustandsschätzer 126 verwendet.

Im Folgenden werden Anforderungen an die Kombination aus Kanalcodierung (z.B. FEC) und Verschachtelung (engl. interleaving) beschrieben.

Wie bereits oben beschrieben, müssen für eine optimale Funktion der iterativen Kanalschätzung die dafür herangezogenen, geschätzten Sendesymbole in möglichst lückenloser Folge, d.h. zeitlich direkt aufeinanderfolgend zur Verfügung stehen. Hieraus ergibt sich für die Kombination aus Kanalcodierung (z.B. FEC) und Verschachtelung (engl. interleaving) die Anforderung, dass ein Teildecodiervorgang bei Einspeisung von weichen bzw. harten Bits aus dem Symbolrückabbilder (engs. Symbol demapper) 122, welche auf aufeinanderfolgenden Symbolen basieren, mit Codierungsgewinn möglich ist.

Im Folgenden werden (ohne Einschränkung der Allgemeingültigkeit) zur Veranschaulichung einige konkrete Ausführungsbeispiele zur Gestaltung von Kanalcodierung (z.B. FEC) und Verschachtelung (engl. interleaving) gezeigt. Zum besseren Verständnis werden wie oben eine Faltungscodierung mit der Rate 1/(R=3) sowie ein BPSK Symbolabbildung (engl. symbol mapping) angenommen.

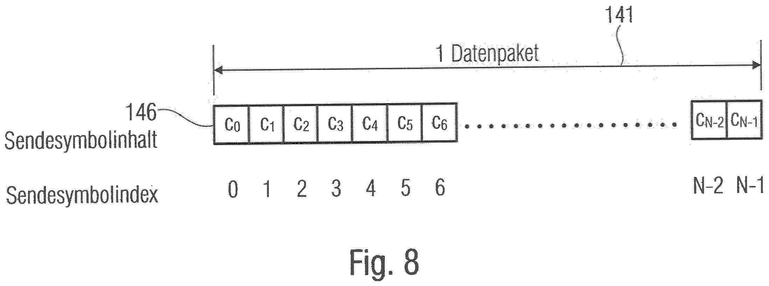

Es wird die folgende Notation angenommen. Entsprechend Fig. 1 werden die von der Kanalcodierung (FEC) codierten Bits mit cₙ, n=0...N-1, cₙ ∈ {0,1} bezeichnet, die Bits nach dem Verschachteln mit bₙ, n=0...N-1, bₙ ∈ {0,1}. Aufgrund der BPSK Symbolabbildung (engl. symbol mapping) gilt für die Sendesymbole aₙ =(2·bₙ-1), n=0...N-1, aₙ ∈{-1,+1}. Die Zuordnung des Verschachtelers (engl. interleaver) wird in den folgenden Fig. 8 bis 13 grafisch dadurch veranschaulicht, dass für die jeweilige Symbolposition (Sendesymbolindex) das zugehörige codierte Bit cₙ angegeben wird, auf dessen Basis das Sendesymbol erzeugt wird.

Gemäß einem ersten Beispiel kann eine Übertragung einer Nachricht in einem Datenpaket ohne Verschachtelung erfolgen, wie dies in Fig. 8 gezeigt ist.

Im Detail zeigt Fig. 8 eine schematische Ansicht eines Datenpakets 141 mit N Datensymbolen 146 (c₀, c₁, c₂, ..., c_{N-1}). Mit anderen Worten, Fig. 8 zeigt ein Ausführungsbeispiel ohne Verschachtelung, wobei die Nachricht aus einem Datenpaket bestehen kann.

Wie in Fig. 8 ersichtlich ist, entfällt hier der Verschachteler (engl. interleaver) nach der Kanalcodierung (z.B. FEC), was in der linear aufsteigenden Indizierung der codierten Bits c deutlich wird. Der Decodiervorgang kann analog zum Beispiel gemäß Fig. 7 erfolgen.

Gemäß einem zweiten Beispiel kann eine Übertragung einer Nachricht aufgeteilt auf mehrere Teil-Datenpakete mit Block-Verschachtelung erfolgen.

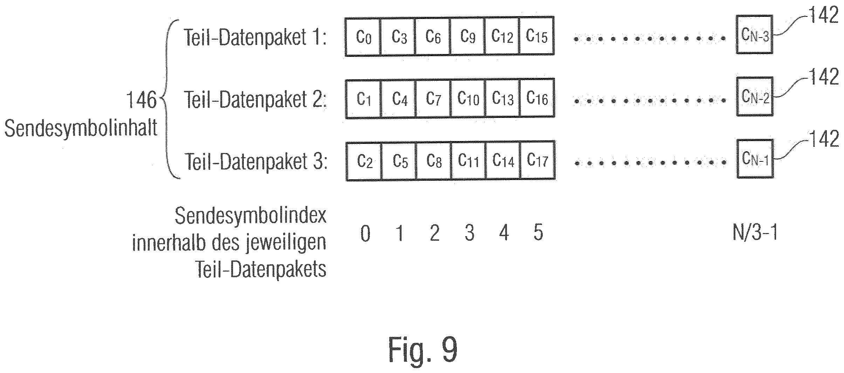

Fig. 9 zeigt eine schematische Ansicht von drei Teil-Datenpaketen 142, wobei die N Datensymbole 146 (c₀, c₁, c₂, ...,c_{N-1}) auf die drei Teil-Datenpakete 142 verschachtelt aufgeteilt sind. Mit anderen Worten, Fig. 9 zeigt ein Ausführungsbeispiel mit Verschachtelung, wobei die Nachricht aus drei Teil-Datenpaketen 142 bestehen kann.

In Fig. 9 ist ersichtlich, dass der Block-Verschachteler - beginnend mit dem ersten codierten Bit - jedes dritte Bit der Folge codierter Bits c₀, c₁, c₂, ...,c_{N-1} dem ersten Teil-Datenpaket 142 zuordnet. Eine entsprechende Zuordnung erfolgt für das zweite und das dritte Teil-Datenpaket 142, wobei mit dem zweiten bzw. dritten codierten Bit begonnen werden kann.

Für den Fall, dass die drei Teil-Datenpakete 142 bei der Übertragung einem jeweils unterschiedlichen zeitvarianten Übertragungskanal unterliegen, kann im Empfänger 110 für jedes Teil-Datenpaket 142 eine individuelle, iterative Kanalschätzung erfolgen. Im ersten Teil-Datenpaket beispielsweise benötigt ein iterativer Kanalschätzer hierbei sukzessive die Schätzung der Sendesymbole 146, welche auf den zu den codierten Bits c_{3·n}, n=0,1,...(N/3-1) zugehörigen Symbolen basieren. In einen Teildecodiervorgang - bei welchem in diesem Beispiel vorteilhafterweise ein Viterbi-Decoder als Sequenzschätzer zum Einsatz kommt - gehen jedoch auch die Sendesymbole ein, welche auf den codierten Bits c_{3·n+1}, und c_{3·n+2} basieren. In die Schätzung der Sendesymbole aus dem ersten Teil-Datenpaket 142 gehen somit auch die Symbole des zweiten und dritten Teil-Datenpakets 142 ein, wodurch sich für alle drei Teil-Datenpakete 142 eine zuverlässigere Schätzung der Sendesymbole ergibt, welche wiederum die iterative Kanalschätzung zuverlässiger macht.

Gemäß einem dritten Beispiel kann eine Übertragung einer Nachricht aufgeteilt auf eine Mehrzahl von Teil-Datenpaketen 142 mit Präambeln erfolgen.

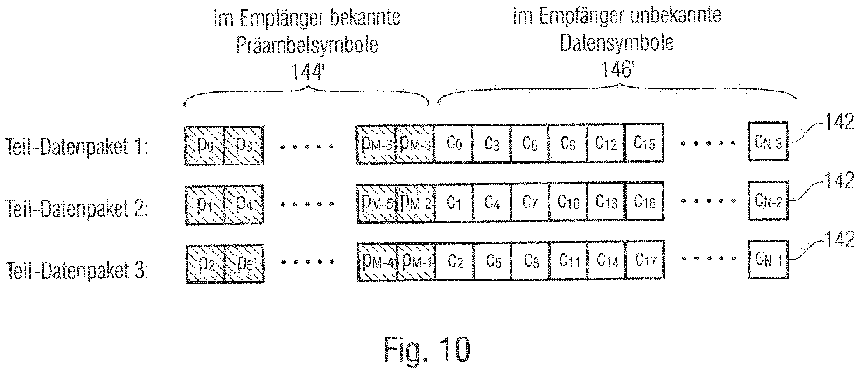

Fig. 10 zeigt eine schematische Ansicht von drei Teil-Datenpaketen 142, wobei die N Datensymbole 146 (c₀, c₁, c₂, ...,c_{N-1}) auf die drei Teil-Datenpakete 142 verschachtelt aufgeteilt sind, wobei die Teil-Datenpakete 142 ferner M Präambelsymbole 144 (p₀, p₁, p₂, p₃, ..., p_{M-1}) aufweisen, die ebenfalls auf die drei Teil-Datenpakete 142 verschachtelt aufgeteilt sind und in den jeweiligen Teil-Datenpaketen 142 den Datensymbolen 146 vorangestellt sind. Mit anderen Worten, Fig. 10 zeigt ein Ausführungsbeispiel mit Präambel, wobei die Nachricht aus drei Teil-Datenpaketen 142 besteht.

In diesem Ausführungsbeispiel kann in jedem Teil-Datenpaket 142 den im Empfänger 110 unbekannten datenabhängigen Sendesymbolen 146 eine Präambel (auch Referenz- oder Trainings- oder Pilotsequenz) 144 der Länge M/3 vorangestellt werden, deren Symbole dem Empfänger vorab bekannt sind. Es ist für die Anwendung der Ausführungsbeispiele unerheblich, ob die Teil-Datenpakete 142 identische oder unterschiedliche Präambel-Sequenzen 144 verwenden.

In diesem Ausführungsbeispiel kann zunächst für jedes Teil-Datenpaket 142 eine initiale Kanalzustandsschätzung auf Basis der im Empfänger 110 bekannten Präambelsymbole 144 erfolgen. Im Übergangsbereich zwischen den Präambelsymbolen 144 und den unbekannten Datensymbolen 146 kann die Kanalzustandsschätzung basierend auf einer Sequenz jeweils bestehend sowohl aus Präambelsymbolen 144 als auch (unter Verwendung der iterativen Teildecodierung) geschätzten Datensymbolen 146 erfolgen.

Gemäß einem vierten Beispiel kann eine Übertragung einer Nachricht aufgeteilt auf eine Mehrzahl von Teil-Datenpaketen 142 mit mittleren Präambeln (engl. midabmble) und Verschachtelung erfolgen.

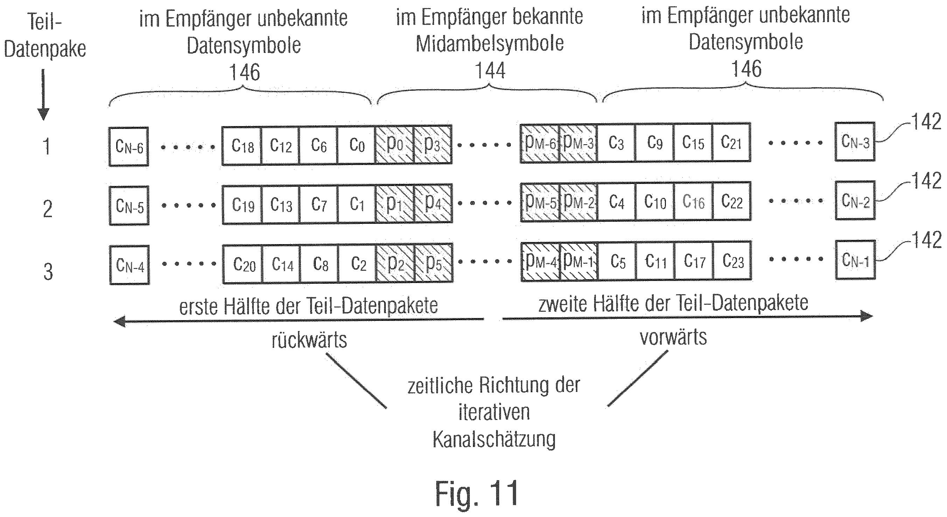

Fig. 11 zeigt eine schematische Ansicht von drei Teil-Datenpaketen 142, wobei die N Datensymbole 146 (c₀, c₁, c₂, ...,c_{N-1}) auf die drei Teil-Datenpakete 142 verschachtelt aufgeteilt sind, wobei die drei Teil-Datenpakete 142 ferner M Präambelsymbole 144 (p₀, p₁, p₂, p₃, ..., p_{M-1}) aufweisen, die ebenfalls auf die drei Teil-Datenpakete 142 verschachtelt aufgeteilt sind und in den jeweiligen Teil-Datenpaketen 142 in der Mitte zwischen den Datensymbolen 146 angeordnet sind. Mit anderen Worten, Fig. 11 zeigt ein Ausführungsbeispiel mit mittlerer Präambel (engl. midambel), wobei die Nachricht aus drei Teil-Datenpaketen 142 besteht.

Wie in Fig. 11 zu erkennen ist, können die zu übertragenden Symbole (Datensymbole 146) durch den Verschachteler (engl. interleaver) "spaltenweise" sukzessive von innen nach außen um die mittlere Präambel (engl. midambel) angeordnet werden. Eine genaue Symmetrie im Aufbau der Teil-Datenpakete 142, d.h. eine gleiche Anzahl von Datensymbolen 146 vor und nach der mittleren Präambel, ist nicht erforderlich, aber hilfreich.

Bei einer solchen Struktur der Teil-Datenpakete 142 kann die iterative Kanalschätzung der ersten Hälfte der Teil-Datenpakete 142 vorteilhafterweise in zeitlich inverser Richtung ("rückwärts") durchgeführt werden, in der zweiten Hälfte in normaler zeitlicher Richtung ("vorwärts"). Für die Durchführung der Kanalschätzung in Rückwärts-Richtung kann beispielsweise eine zeitlich inverse Anordnung von Signalausschnitten und Symbolfolgen sowie eine Konjugation bestimmter Größen erfolgen.

Es ist zu beachten, dass aufgrund der durch den Verschachteler (engl. interleaver) vorgegebenen Anordnung der Symbole der Teildecodiervorgang selbst immer in regulärer (positiver) zeitlicher Richtung abläuft, auch wenn die iterative Kanalschätzung für die ersten Hälften der Teil-Datenpakete 142 in inverser zeitlicher Richtung verläuft.

Ein entsprechend dem obigen Ausführungsbeispiel (gemäß Fig. 11) arbeitender Verschachteler (engl. interleaver) für die Übertragung von Telegrammen mit variabler Teil-Datenpaketanzahl (Subpaketanzahl) ist in [5] beschrieben.

Gemäß einem fünften Beispiel kann eine Übertragung einer Nachricht mit zyklisch verschobenen Bits nach der Kanalcodierung erfolgen.

Dieses Ausführungsbeispiel nimmt konkret Bezug auf die Übertragung einer Nachricht in Teil-Datenpaketen gemäß dem ETSI-Standard [6]. Dabei wird eine Nachricht der Länge 186 Bit mit eine 1/3-ratigen Faltungscode mit der Einflusslänge (engl. constraint length) 7 mit abschließender "Null-Terminierung" codiert, sodass sich eine Folge von 576 codierten Bits (c₀...C₅₇₅) ergibt.

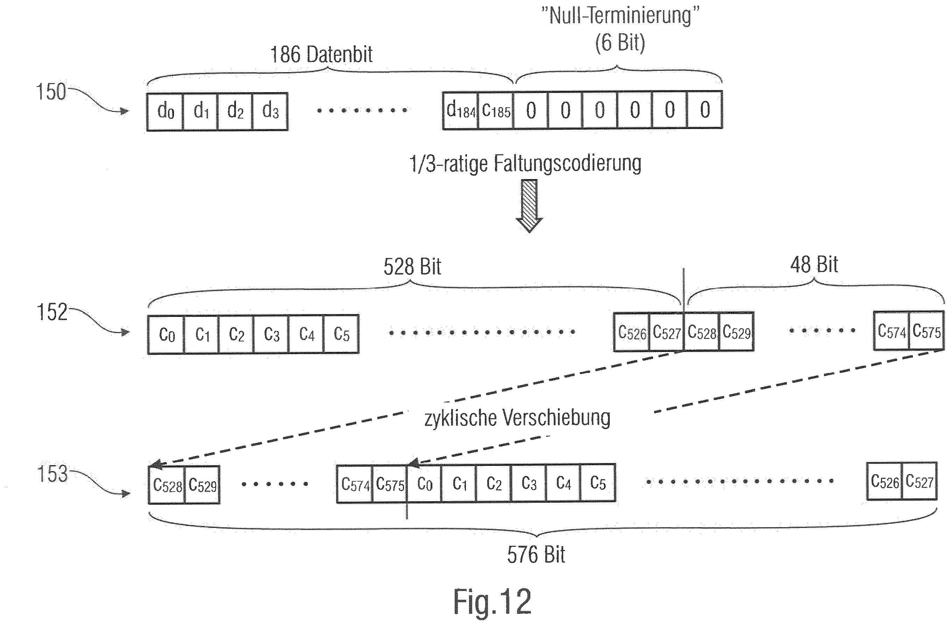

Der Verschachteler (engl. interleaver) kann in einem ersten Schritt zunächst eine zyklische Verschiebung um 48 Bit durchführen, wie dies auch in [5], [6] beschrieben ist. Dies ist in Fig. 12 dargestellt.

Fig. 12 zeigt eine schematische Ansicht der Codierung einer beispielhaften Datenbitfolge (do, d₁, d₂, ..., d₁₈₅) mit 186 Bits, die mit Nullen zu einer Datenbitfolge mit 192 Bits aufgefüllt wird, zu einer Folge von 576 codierten Bits 152 (c₀, c₁, c₂, c₃, ... c₅₇₅) unter Verwendung einer Faltungscodierung mit einer Coderate 1/(R=3) sowie einer zyklischen Verschiebung der letzten 48 Bits der Folge von 576 codierten Bits 152 an den Anfang der Folge von 576 codierten Bits 152, um eine zyklisch verschobene Folge von 576 codierten Bits 153 (c₅₂₈, C₅₂₉, c₅₃₀, ..., c₅₇₅, c₀, c₁, c₂, c₃, ...c₅₂₇) zu erhalten. Mit anderen Worten, Fig. 12 zeigt eine zyklische Verschiebung der letzten 48 Bit der codierten Bitfolge 152 im ersten Schritt.

Anschließend erfolgt eine Aufteilung der zyklisch verschobenen Bitfolge 153 auf 24 Teil-Datenpakete 142. Jedes Teil-Datenpaket 142 weist dabei 36 Symbole auf, aufgebaut wie folgt: zwölf Datensymbole 146, zwölf mittlere Präambelsymbole (engl. midambel symbols) 144, zwölf Datensymbole 146. Ähnlich wie in Fig. 11 erfolgt die Zuordnung der (zyklisch verschobenen) codierten Bitfolge 153 "spaltenweise" von innen nach außen bezüglich der mittleren Präambel (engl. midambel).

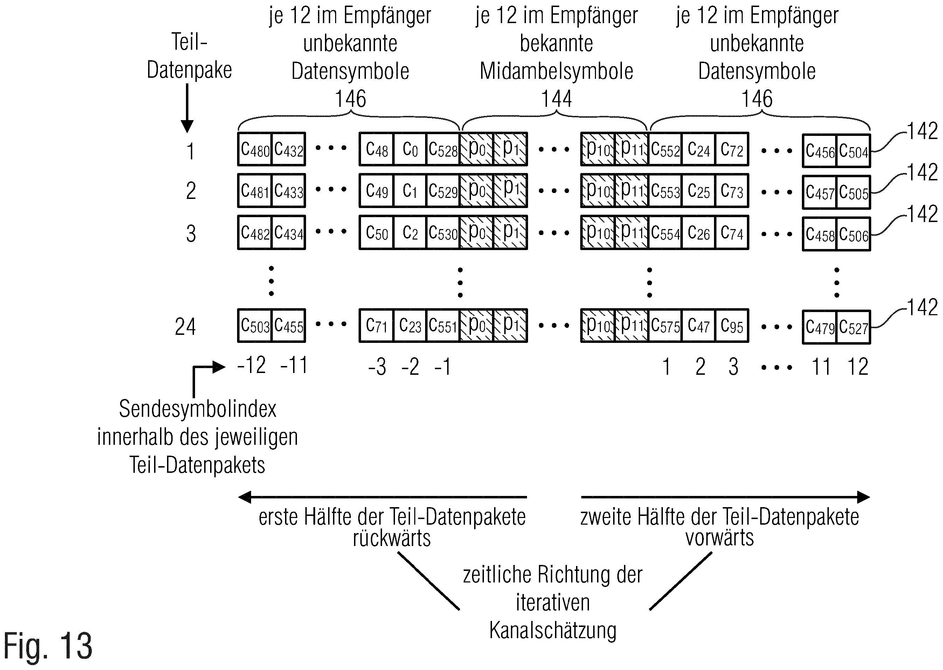

Die Struktur des gesamten Verschachtelers (unter Berücksichtigung der zyklischen Verschiebung) ist in Fig. 13 veranschaulicht.

Fig. 13 zeigt eine schematische Ansicht von 24 Teil-Datenpaketen 142, wobei die 576 Bits der zyklisch verschobenen Datenbitfolge (c₅₂₈, C₅₂₉, c₅₃₀, ..., c₅₇₅, c₀, c₁, c₂, c₃, ...c₅₂₇) 153 auf die 24 Teil-Datenpakete 142 verschachtelt aufgeteilt sind, wobei die 24 Teil-Datenpakete 142 ferner jeweils 12 Präambelsymbole 144 (p₀, p₁, p₂, p₃, ..., p₁₁) aufweisen und in den jeweiligen Teil-Datenpaketen 142 in der Mitte zwischen den Datensymbolen 146 angeordnet sind. Mit anderen Worten, Fig. 13 zeigt ein Ausführungsbeispiel des Verschachtelers (engl. interleaver) gemäß ETSI-Standard [6], wobei die Nachricht aus 24 Teil-Datenpaketen 142 zu je 36 Symbolen besteht.

Der Übersichtlichkeit halber werden in Fig. 13 die Symbolindizes der (den codierten Bits zugeordneten) Sendesymbole 146 für die zeitlich vor der mittleren Präambel (engl. midambel) befindlichen Symbole von -12...-1 nummeriert und für die nach der mittleren Präambel (engl. midambel) befindlichen Symbole 146 mit +1...+12.

Prinzipiell ist der Ablauf der iterativen Kanalschätzung wie im vierten Beispiel beschrieben, d.h. die iterative Kanalschätzung der ersten zwölf Symbole der Teil-Datenpakete 142 erfolgt in zeitlich inverser Richtung ("rückwärts"), in der zweiten Hälfte in normaler zeitlicher Richtung ("vorwärts").

Eine Besonderheit gegenüber obigen Ausführungen ergibt sich in diesem Beispiel jedoch durch die zyklische Verschiebung um 48 Bit gemäß Fig. 12. Es wird nun (ohne Einschränkung der Allgemeingültigkeit) angenommen, dass der Viterbi-Decoder für einen einzelnen Iterationsschritt jeweils Schätzwerte für 48 codierte Bits (entsprechend 2.24 Sendesymbolen) liefert.

Im ersten Iterationsschritt kann der Decoder 160 somit Schätzwerte für die 24 Symbole des Sendesymbolindex "-1" sowie für weitere 24 Symbole des Sendesymbolindex "+1" liefern. Dies entspricht gemäß der Verschachtelungsstruktur nach Fig. 13 einer Schätzung der codierten Bits {c₅₂₈, c₅₂₉,... c₅₇₅}. Diese stellen die letzten 48 Bits der codierten Bitfolge dar und werden ausschließlich durch den Inhalt der Datenbits {d₁₈₀, d₁₈₁,....d₁₈₅} determiniert. Aufgrund der "Null-Terminierung" des Faltungsencoders ist (bei Vorliegen der geschätzten Empfangssymbole zu den Sendesymbolindizes "-1" und "+1") eine Teildecodierung der gesendeten Datenbits {d₁₈₀, d₁₈₁,...d₁₈₅} bei unbekanntem Anfangszustand und bekanntem Endzustand im Trellis-Diagramm des Viterbi-Decoders möglich. Da letztlich eine verbesserte Schätzung der codierten Bits {c₅₂₈, c₅₂₉,... c₅₇₅} angestrebt wird, ist kann eine explizite Ermittlung der gesendeten Datenbits {d₁₈₀, d₁₈₁,...d₁₈₅} auch umgangen werden, indem im Zuge der Teildecodierung im Viterbi-Decoder der wahrscheinlichste Pfad im Trellis-Diagramm ermittelt wird und die mit diesem Pfad assoziierten codierten Bits als Schätzwerte für die codierten Bits {c₅₂₈, c₅₂₉,... c₅₇₅} dienen. Diese Vorgehensweise ist auch in allen weiteren Iterationsschritten möglich und wird im Folgenden nicht mehr explizit erwähnt.

Im zweiten Iterationsschritt, die Sendesymbolindizes "-2" und "+2" betreffend, werden durch den Viterbi-Decoder die codierten Bits {c₀, c₁,...c₄₇} geschätzt, welche aus den Datenbits {d₀, d₁,...d₁₅} hervorgehen. In diesem Fall läuft der Viterbi-Decoder bei der Teildecodierung mit bekanntem Anfangszustand ("0") und unbekanntem Endzustand. Um den durch den unbekannten Endzustand bestehenden Zuverlässigkeitsverlust der Sequenzschätzung zu mindern, ist es empfehlenswert, die vom Symbolrückabbilder (engl. symbol demapper) 122 geschätzten 48 Symbole zu den Zeitpunkten "-3" und "+3" mit hinzuzuziehen, auch wenn diese von den Zeitpunkten der letzten Kanalzustandsschätzung zwangsweise etwas weiter entfernt liegen.

Der beschriebene Vorgang wird für alle weiteren Iterationsschritte durchgeführt, wobei ab dem dritten Schritt (k=3) die Wahrscheinlichkeitsinformation der Anfangszustände des Viterbi-Decoders mit den jeweils zeitlich zugehörigen Wahrscheinlichkeitsinformationen des vorherigen Decoder-Aufrufs vorbesetzt werden können.

In einigen obigen Ausführungsbeispielen (Fig. 9, Fig. 10 und Fig. 11) wurde das Prinzip der Erfindung - insbesondere eine durch den Verschachteler (engl. interleaver) gegebene, im Sinne der Erfindung vorteilhafte Zuordnung der codierten Bits zu den Sendesymbolpositionen - aus Gründen der Anschaulichkeit für drei Teil-Datenpakete, einer Faltungscodierung mit einer Coderate von 1/3 und binärem (BPSK) Symbol Mapping dargestellt.

Eine Anwendung des dargestellten Prinzips auf eine andere Anzahl von Teil-Datenpaketen oder auf eine andere als der im Beispiel gewählten Coderate von 1/3 ist für den Fachmann leicht nachvollziehbar. Ebenso die Anwendung einer höherstufigen Symbolabbildung, wodurch ein Sendesymbol durch mehr als ein codiertes Bit konstituiert wird. Als FEC kommt gleichfalls eine andere Codierung als eine Faltungscodierung in Betracht, falls sich mit dieser in Kombination mit dem gewählten Verschachteler im Zuge der Teildecodierung ein entsprechender Codierungsgewinn erzielen lässt.

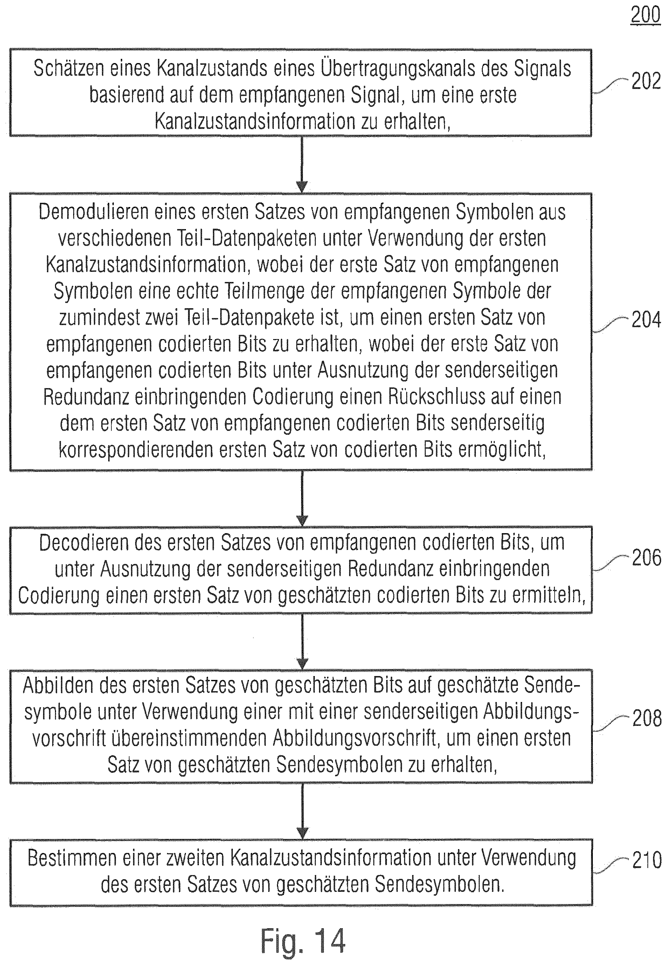

Fig. 14 zeigt ein Flussdiagramm eines Verfahrens 200 zum Empfangen eines Signals, wobei das Signal zumindest zwei separate Teil-Datenpakete aufweist, wobei die zumindest zwei separaten Teil-Datenpakete Symbole aufweisen, die codierte Bits abbilden, die aus einer für die zumindest zwei separaten Teil-Datenpakete gemeinsam durchgeführten Redundanz einbringenden Codierung einer Datenbitfolge resultieren. Das Verfahren 200 umfasst einen Schritt 202 des Schätzens eines Kanalzustands eines Übertragungskanals des Signals basierend auf dem empfangenen Signal, um eine erste Kanalzustandsinformation zu erhalten. Ferner umfasst das Verfahren 200 einen Schritt 204 des Demodulierens eines ersten Satzes von empfangenen Symbolen aus verschiedenen Teil-Datenpaketen unter Verwendung der ersten Kanalzustandsinformation, wobei der erste Satz von empfangenen Symbolen eine echte Teilmenge der empfangenen Symbole der zumindest zwei Teil-Datenpakete ist, um einen ersten Satz von empfangenen codierten Bits zu erhalten, wobei der erste Satz von empfangenen codierten Bits unter Ausnutzung der senderseitigen Redundanz einbringenden Codierung einen Rückschluss auf einen dem ersten Satz von empfangenen codierten Bits senderseitig korrespondierenden ersten Satz von codierten Bits ermöglicht. Ferner umfasst das Verfahren 200 einen Schritt 206 des Decodierens des ersten Satzes von empfangenen codierten Bits, um unter Ausnutzung der senderseitigen Redundanz einbringenden Codierung einen ersten Satz von geschätzten codierten Bits zu ermitteln. Ferner umfasst das Verfahren 200 einen Schritt 208 des Abbildens des ersten Satzes von geschätzten Bits auf geschätzte Sendesymbole unter Verwendung einer mit einer senderseitigen Abbildungsvorschrift übereinstimmenden Abbildungsvorschrift, um einen ersten Satz von geschätzten Sendesymbolen zu erhalten. Ferner umfasst das Verfahren 200 einen Schritt 210 des Bestimmens einer zweiten Kanalzustandsinformation unter Verwendung des ersten Satzes von geschätzten Sendesymbolen.

Ausführungsbeispiele schaffen eine iterative decodergestützte Kanalschätzung. Hierbei erfolgt
- eine iterative Kanalschätzung mit (sukzessiver) Teildecodierung,
- eine Ausnutzung des Codierungsgewinns für zuverlässigere Schätzung der Sendesymbole, und
- eine Bereitstellung der Symbole für die Kanalzustandsschätzung durch den Decoder sowie nachfolgender Verschachtelung (engl. interleaving) und Symbolabbildung (engl. symbol mapping).

Ausführungsbeispiele sind prinzipiell anwendbar auf jede Art von senderseitig angewandter FEC Codierung, die
(1) eine Teildecodierung der Sendesequenz mit Erzielung eines Codierungsgewinns ermöglicht und
(2) im Rahmen der Teildecodierung Schätzwerte für die codierten Bits und damit für die gesendeten Symbole liefern kann und
(3) in Kombination mit dem Verschachteler (engl. interleaver) und dem Symbolabbilder (engl. symbol mapping) die im iterativen Verfahren geschätzten Sendesymbole dergestalt aufeinanderfolgen, dass diese für eine sukzessiv (in positiver oder negativer Zeitrichtung) voranschreitende Kanalschätzung brauchbar sind.

Ausführungsbeispiele schaffen eine Teildecodierung mittels Viterbi-Decoder. Falls senderseitig als Kanalcodierung (z.B. FEC) eine Faltungscodierung eingesetzt wird, kann für die Teildecodierung ein Viterbi-Decoder zum Einsatz kommen, welcher einen Faltungscode unter bestimmten Umständen optimal decodieren kann.

Im Folgenden werden Eingangsgrößen für eine Teil-Decodierung mit Viterbi-Decoder beschrieben. Der Viterbi-Decoder benötigt für eine Teildecodierung als Eingangsgrößen harte Bits (binär) oder Zuverlässigkeitsinformation in Form von weichen Bits (z.B. LLRs), welche vom Symbolrückabbilder (engl. symbol demapper) bereitgestellt werden. Weitere Eingangsgrößen können die Wahrscheinlichkeiten (je nach Implementierung z.B. in linearer oder logarithmischer Form) für jeden Zustand im zugehörigen Trellis-Diagramm zu Beginn und am Ende (z.B. eigentlich für den aktuellen Aufruf eine Ausgangsgröße, welche erst beim nächsten Aufruf dann als Eingangsgröße fungiert) der Teildecodierung sein.

Im Folgenden werden Zustandswahrscheinlichkeiten für den Beginn und das Ende einer Teildecodierung beschrieben. Die Wahrscheinlichkeitsinformation über alle möglichen Anfangszustände einer Teildecodierung besteht bei sukzessivem Aufruf des Viterbi-Decoders und einer nahtlos zusammenhängenden Datenbitsequenz aus internen Zustandswahrscheinlichkeiten des jeweils vorangehenden Aufrufs des Viterbi-Decoders oder werden unmittelbar daraus abgeleitet. Sind Anfangs- und/oder Endzustand für eine Teildecodierung a-priori bekannt, so werden diese bei dem Aufruf des Viterbi-Decoders entsprechend berücksichtigt.

Im Folgenden wird eine Teil-Decodierung mit Decoder-Nachlauf beschrieben. Für eine optimale Sequenzschätzung braucht der Viterbi-Decoder idealerweise einen bekannten Endzustand. Diese Bedingung ist üblicherweise während der Teildecodierung nicht erfüllt. Aus diesem Grund kann die Teildecodierung über die Länge der eigentlich gewünschten Sequenz hinaus verlängert werden (Decoder-Nachlauf), um die Zuverlässigkeit der Sequenzschätzung zu erhöhen. In der Fachliteratur wird empfohlen, den Decodiervorgang um etwa die fünffache Einflusslänge (engl. constraint length) des Faltungscodes über die zu schätzende Sequenz hinaus zu verlängern. Dieser Nachlauf verringert sich sukzessive, wenn bei Annäherung an das Ende der Folge der codierten Datenbits der i.d.R. bekannte Endzustand in der Decodierung genutzt werden kann.

Ausführungsbeispiele schaffen eine iterative Kanalschätzung bei Übertragung einer Nachricht in mehreren Teil-Datenpaketen. Voraussetzung hierfür ist, dass eine durch FEC codierte Nachricht (Datenpaket) auf mehrere Teil-Datenpakete aufgeteilt übertragen wird (siehe z.B. Fig. 9, Fig. 10 und Fig. 11). Jedes Teil-Datenpaket kann bei seiner Übertragung potentiell einem individuellen, zeitvarianten Übertragungskanal unterliegen. Damit kann eine individuelle Kanalzustandsschätzung für jedes Teil-Datenpaket erforderlich sein. Im Empfänger kann für jedes Teil-Datenpaket eine individuelle Kanalzustandsschätzung erfolgen, wobei die dafür nötigen, geschätzten Sendesymbole jedoch auf einem für alle betroffenen Teil-Datenpakete gemeinsamen Teildecodiervorgang basieren. Insofern kann von einer gemeinsamen, Teil-Datenpaket übergreifenden Kanalschätzung gesprochen werden, welche gleichzeitig den Kanalzustand mehrerer Übertragungskanäle schätzt (mehrdimensionale iterative Kanalschätzung).

Ausführungsbeispiele schaffen eine Empfangs-Diversität. Liegen im Empfänger z.B. durch den Einsatz mehrerer Antennen Empfangsdiversität und somit mehrere Empfangssignale vor, so kann das Verfahren in folgender Weise angewandt werden: Der Symbolrückabbilder (engl. symbol demapper) kann für die aus allen Empfangssignalen gewonnenen Empfangssymbole ein sogenanntes "Maximum Ratio Combining" (MRC) durchführen. Die Kanalzustandsschätzung kann für jedes Empfangssignal individuell erfolgen.

Ausführungsbeispiele schaffen eine Verwendung der Ergebnisse aus der Teildecodierung zur Datenbitschätzung. Die Teildecodierung im Rahmen der iterativen Kanalschätzung dient vorrangig dem Zweck, der Kanalzustandsschätzung möglichst zuverlässig geschätzte Sendesymbole bereitzustellen. Gleichwohl können im Rahmen der iterativen Teildecodierung sukzessiv Schätzwerte für die gesendeten Datenbits anfallen. Liegen nach Durchführung aller Iterationsschritte der Kanalschätzung durch die Teildecodierung Schätzwerte für alle gesendeten Datenbits vor, so kann mit Hilfe eines Prüfwerts (z.B. zyklische Redundanzprüfung, engl. CRC) bestimmt werden, ob die geschätzten Datenbits korrekt sind. Im Fall eines positiven Prüfungsergebnisses kann der Verarbeitungsschritt "endgültige Kanaldecodierung" (siehe Fig. 5, 138) entfallen und somit der entsprechende Aufwand im Empfänger eingespart werden.

Ausführungsbeispiele schaffen eine Ausführung mehrerer Kanalschätzungen mit unterschiedlichen Parametern. In realen Übertragungssystemen ist die Geschwindigkeit der Kanaländerung oft vorab nicht bekannt. In Funksystemen z.B. korreliert die Geschwindigkeit der Kanaländerung direkt mit der zumeist unbekannten Bewegungsgeschwindigkeit der Funkteilnehmer, welche zu einer sogenannten Doppler-Spreizung des Kanals führt. Für eine schnelle Kanaländerung (z.B. durch sich schnell bewegende Funkteilnehmer) benötigt der Kanalzustandsschätzer eine andere Parametrierung (z.B. Länge des ausgewerteten Signalausschnitts) als für langsame Kanaländerung.

Dieses Problem kann gelöst werden, indem mehrere iterative Kanalschätzungen mit unterschiedlicher Parametrierung der Kanalzustandsschätzung komplett (d.h. über alle Iterationsschritte) ausgeführt werden. Damit erfolgt beispielsweise eine Kanalzustandsschätzung, die für niedrige Geschwindigkeit der Kanaländerung optimiert ist, und zusätzlich eine weitere Kanalzustandsschätzung, die für hohe Geschwindigkeit der Kanaländerung optimiert ist. In der Darstellung nach Fig. 5 bedeutet dies, dass alle Blöcke im Bereich 166 sowie die "endgültige Kanaldecodierung" 138 mehrfach mit unterschiedlicher Parametrierung ausgeführt werden.

Die Ausführungen für jeweils unterschiedliche Parametrierungen erfolgen vorteilhafterweise nacheinander. Nach jeder abgeschlossenen Ausführung der iterativen Kanalschätzung für eine Parametrierung kann z.B. mit Hilfe eines Prüfwerts bestimmt werden, ob die geschätzten Datenbits korrekt sind (siehe Ausführungen zum Ausführungsbeispiel der Verwendung der Ergebnisse aus der Teildecodierung zur Datenbitschätzung). Sind die geschätzten Datenbits gemäß Prüfwert korrekt, kann auf die Ausführung weiterer iterativer Kanalschätzungen desselben Empfangssignals mit anderer Parametrierung verzichtet werden.

Ausführungsbeispiele schaffen eine Kanalschätzung in inverser Zeitrichtung. In vielen Übertragungssystemen werden zur Detektion eines Signals oder zur (initialen) Kanalschätzung im Empfänger vorab bekannte Datensymbole (Referenzsymbole) übertragen. Wenn diesen Referenzsymbolen unbekannte Datensymbole vorangestellt sind, kann die Kanalschätzung für diesen Teil des Signals vorteilhafterweise in inverser Zeitrichtung ("rückwärts") durchgeführt werden. Hierbei kann der Decoder im Rahmen der iterativen Teildecodierung die zu schätzende Datenbitfolge dennoch in positiver Zeitrichtung verarbeiten. Voraussetzung hierfür ist ein geeigneter Verschachteler (engl. interleaver).

Werden unbekannte Datensymbole sowohl vor als auch nach einer Folge von bekannten Symbolen (z.B. einer mittleren Präambel (engl. midambel)) übertragen, so kann die Kanalschätzung für den zeitlich vor den Referenzsymbolen liegenden Teil der Datensymbole in Rückwärtsrichtung und gleichzeitig für den nach den Referenzsymbolen liegenden Teil der Datensymbole in Vorwärtsrichtung erfolgen (siehe Fig. 11). Voraussetzung hierfür ist gleichfalls ein dafür geeigneter Verschachteler (engl. interleaver).

Ausführungsbeispiele schaffen eine Erzeugung von Symbolen mit Zuverlässigkeitsinformation. Steht im Rahmen der Teildecodierung eine Zuverlässigkeitsinformation der geschätzten codierten Bits ĉ (siehe Fig. 5) zur Verfügung, z.B. bei Anwendung einer Decodierung mit Bereitstellung von Zuverlässigkeitsinformation hinsichtlich der codierten Bits (engl. soft output decoding), so kann (nach dem Verschachteln (engl. interleaving)) der Symbolabbilder (engl. symbol mapper) daraus anstelle von "hart entschiedenen" geschätzten Symbolen auch "weich entschiedene" Symbole (engl. soft symbols) erzeugen, welche als Eingangsgrößen für die Kanalzustandsschätzung herangezogen werden. Hierdurch kann die Kanalzustandsschätzung gegenüber dem Fall "hart entschiedener" Symbole verbessert werden.

Ausführungsbeispiele finden Anwendung in einem System zur Übertragung von Daten von einem Sender zu einem Empfänger. Die hierin beschriebenen Konzepte gelten für jede Übertragung, bei welcher
- ein potentiell zeitvarianter Übertragungskanal zwischen Sender und Empfänger vorliegt,
- eine fortlaufende Schätzung dieses Kanals (z.B. nach Amplitude und Phase) erforderlich oder vorteilhaft ist,
- eine Vorwärtsfehlerkorrektur (engl. forward error correction (FEC)) zum Einsatz kommt, welche die zu übertragenden Daten bei der Übertragung mit Redundanz beaufschlagt und
- eine symbolgestützte Kanalzustandsschätzung zur Anwendung kommt.

Ein typisches Anwendungsgebiet ist z.B. die Übertragung einer Nachricht in einem digitalen Funkkommunikationssystem, bei welchem der Übertragungskanal durch Bewegung des Senders und/oder Empfängers zeitvariant sein kann und bei dem z.B. durch Einsatz kohärenter Demodulation eine fortlaufende Schätzung des Kanals erforderlich ist. Besonders vorteilhaft kann die Erfindung in einem System eingesetzt werden, in welchen eine Nachricht (Datenpaket) in mehreren Teil-Datenpaketen übertragen wird (sogenanntes Telegram Splitting, siehe z.B. DE102011082098).

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Abkürzungsverzeichnis

- BPSK: Binary Phase Shift Keying (dt. binäre Phasenumtastung)
- CRC: Cyclic Redundancy Check (dt. zyklische Redundanzprüfung)
- FEC: Forward Error Correction (dt. Vorwärtsfehlerkorrektur)
- LLR: Log Likelihood Ratio (dt. Log-Likelihood Verhältnis)
- LMS: Least-Mean-Squares (dt. kleinste mittlere Quadrate)
- MRC: Maximum Ratio Combining (dt. Kombination der maximalen Verhältnisse)
- RLS: Recursive Least Squares (dt. rekursive kleinste Quadrate)

### Literaturverzeichnis

[1] S.N. Crozier, D.D. Falconer, S.A. Mahmoud. "Least sum of squared errors (Isse) channel estimation". IEE Proceedings-F, 138:371-378, August 1991.
[2] Karl-Dirk Kammeyer, "Nachrichtenübertragung", Teubner-Verlag, ISBN 3-519-26142-1,3. Auflage 2004,.
[3] J.G. Proakis, "Digital Communications", New York, McGraw Hill, 1995.
[4] K.-H. Chang, C.N. Georghiades, "Iterative Joint Sequence and Channel Estimation for Fast Time-Varying Intersymbol Interference Channels". In Proceedings of the International Conference on Communications (ICC'95), p. 357-361, Seattle, Juni 1995.
[5] PCT/EP2017/076939
[6] ETSI Technische Spezifikation TS 103 357
[7] DOWLER A ET AL: "Data-derived iterative channel estimation with channel tracking for a mobile fourth generation wide area ofdm system", GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, Bd. 2, 1. Dezember 2003 (2003-12-01), Seiten 804-808, XP010678176, DOI: 10.1109/GLOCOM.2003.1258350 ISBN: 978-0-7803-797 4-9
[8] FABIEN DELESTRE ET AL: "An iterative joint channel estimation and data detection technique for MIMO-OFDM systems", WIRELESS COMMUNICATIONS AND MOBILE COMPUTING CONFERENCE (IWCMC), 2012 8TH INTERNATIONAL, IEEE, 27. August 2012 (2012-08-27), Seiten 195-199, XP032253301, DOI: 10.1109/IWCMC.2012.6314202 ISBN: 978-1-45 77-1 378-1

## Patentansprüche

1. Datenempfänger (110),
wobei der Datenempfänger (110) ausgebildet ist, um ein Signal (120) zu empfangen, wobei das Signal (120) zumindest zwei separate Teil-Datenpakete (142) aufweist, wobei die zumindest zwei separaten Teil-Datenpakete (142) Symbole (146) aufweisen, die codierte Bits (150) abbilden, die aus einer für die zumindest zwei separaten Teil-Datenpakete (142) gemeinsam durchgeführten Redundanz einbringenden Codierung einer Datenbitfolge (152) resultieren,
wobei der Datenempfänger (110) ausgebildet ist, um basierend auf dem empfangenen Signal (120) einen Kanalzustand eines Übertragungskanals (118) des Signals (120) zu schätzen, um eine erste Kanalzustandsinformation (128) zu erhalten,
wobei der Datenempfänger (110) ausgebildet ist, um unter Verwendung der ersten Kanalzustandsinformation (128) einen ersten Satz von empfangenen Symbolen (130) aus verschiedenen Teil-Datenpaketen (142) zu demodulieren, wobei der erste Satz von empfangenen Symbolen (130) eine echte Teilmenge der empfangenen Symbole (146) der zumindest zwei Teil-Datenpakete (142) ist, um einen ersten Satz von empfangenen codierten Bits (132) zu erhalten,
wobei der erste Satz von empfangenen codierten Bits (132) unter Ausnutzung der senderseitigen Redundanz einbringenden Codierung einen Rückschluss auf einen dem ersten Satz von empfangenen codierten Bits (132) senderseitig korrespondierenden ersten Satz von codierten Bits (153) ermöglicht,
wobei der Datenempfänger (110) ausgebildet ist, um den ersten Satz von empfangenen codierten Bits (132) zu decodieren, um unter Ausnutzung der senderseitigen Redundanz einbringenden Codierung einen ersten Satz von geschätzten codierten Bits (164) zu ermitteln der mit einer höheren Wahrscheinlichkeit einem ersten Satz von gesendeten codierten Bits entspricht als die empfangenen codierten Bits, und um den ersten Satz von geschätzten codierten Bits (164) unter Verwendung einer mit einer senderseitigen Abbildungsvorschrift übereinstimmenden Abbildungsvorschrift auf geschätzte Sendesymbole abzubilden, um einen ersten Satz von geschätzten Sendesymbolen (134) zu erhalten;
wobei der Datenempfänger (110) ausgebildet ist, um eine zweite Kanalzustandsinformation (128) unter Verwendung des ersten Satzes von geschätzten Sendesymbolen (134) zu bestimmen;
wobei der Datenempfänger (110) ausgebildet ist, um unter Verwendung der zweiten Kanalzustandsinformation (128) einen zweiten Satz von empfangenen Symbolen (136) aus verschiedenen Teil-Datenpaketen (142) zu demodulieren, wobei der zweite Satz von empfangenen Symbolen (136) eine echte Teilmenge der empfangenen Symbole (146) der zumindest zwei Teil-Datenpakete (142) ist, um einen zweiten Satz von empfangenen codierten Bits (133) zu erhalten;
wobei der zweite Satz von empfangenen Symbolen (136) in den jeweiligen Teil-Datenpaketen (142) einen zeitlich größeren Abstand zu Pilotsymbolen (144) der zumindest zwei Teil-Datenpakete (142) aufweist als der erste Satz von empfangenen Symbolen (130).

2. Datenempfänger (110) nach dem vorangehenden Anspruch,
wobei der erste Satz von empfangenen Symbolen (130) in den jeweiligen Teil-Datenpaketen (142) benachbart zu Pilotsymbolen (144) der zumindest zwei Teil-Datenpakete (142) angeordnet ist.

3. Datenempfänger (110) nach einem der vorangehenden Ansprüche,
wobei der Datenempfänger (110) ausgebildet ist, um zunächst basierend auf Pilotsymbolen (144) der zumindest zwei separaten Teil-Datenpakete (142) den Kanalzustand des Übertragungskanals (118) zu schätzen, um die erste Kanalzustandsinformation (128) zu erhalten.

4. Datenempfänger (110) nach einem der vorangehenden Ansprüche,
wobei der Datenempfänger (110) ausgebildet ist, um den Kanalzustand unter Verwendung des ersten Satzes von geschätzten Sendesymbolen (134) zu schätzen, um die zweite Kanalzustandsinformation (128) zu erhalten.

5. Datenempfänger (110) nach einem der vorangehenden Ansprüche,
wobei der Datenempfänger (110) ausgebildet ist, um den Kanalzustand des Übertragungskanals (118) für jedes der zumindest zwei separaten Teil-Datenpakete (142) zu schätzen.

6. Datenempfänger (110) nach einem der vorangehenden Ansprüche,
wobei der Datenempfänger (110) ausgebildet ist, um den ersten Satz von empfangenen codierten Bits (132) unter Verwendung eines Viterbi Decoders zu decodieren.

7. Datenempfänger (110) nach einem der vorangehenden Ansprüche,
wobei der Datenempfänger (110) ausgebildet ist, um den ersten Satz von empfangenen Symbolen (130) aus den empfangenen Symbolen (146) der zumindest zwei separaten Teil-Datenpakete (142) basierend auf einem dem Datenempfänger (110) bekannten Verschachtelungsmuster auszuwählen, wobei das Verschachtelungsmuster mit einem senderseitigen Verschachtelungsmuster übereinstimmt, basierend auf dem die codierten Bits (152) datensenderseitig auf die zumindest zwei separaten Teil-Datenpakete (142) verschachtelt aufgeteilt werden.

8. Datenempfänger (110) nach einem der vorangehenden Ansprüche,
wobei der Datenempfänger (110) ausgebildet ist, um basierend auf dem ersten Satz von empfangenen codierten Bits (132) einen ersten Satz von geschätzten Sendesymbolen (134) mit Zuverlässigkeitsinformation bereitzustellen.

9. Datenempfänger (110) nach einem der vorangehenden Ansprüche,
wobei der Datenempfänger (110) ausgebildet ist, um den ersten Satz von empfangenen Symbolen (130) zu demodulieren und eine Zuverlässigkeit für den ersten Satz von codierten Bits (132) oder jedes codierten Bits des ersten Satzes von codierten Bits (132) zu schätzen, um für den ersten Satz von codierten Bits (132) zusätzlich eine Zuverlässigkeitsinformation zu erhalten.

10. Datenempfänger (110) zum Empfangen eines Signals (120), wobei das Signal (120) zumindest zwei separate Teil-Datenpakete (142) aufweist, wobei die zumindest zwei separaten Teil-Datenpakete (142) 1/B·R·N Symbole (146) aufweisen, die R·N codierte Bits (152) abbilden, die aus einer für die zumindest zwei separaten Teil-Datenpakete (142) gemeinsam durchgeführten Redundanz einbringenden Codierung von N Datenbits (150) mit einer Coderate von 1/R resultieren, wobei B die Anzahl an pro Symbol abgebildeten codierten Bits angibt,
wobei der Datenempfänger (110) ausgebildet ist, um basierend auf dem empfangenen Signal (120) einen Kanalzustand eines Übertragungskanals (118) des Signals (120) zu schätzen, um eine (k=1)-te Kanalzustandsinformation zu erhalten,
wobei der Datenempfänger (110) ausgebildet ist, um in jedem Iterationsschritt k mit k=1 bis K einer Abfolge von K Iterationsschritten
- unter Verwendung der k-ten Kanalzustandsinformation einen k-ten Satz von empfangenen Symbolen (130) aus verschiedenen Teil-Datenpaketen (142) zu demodulieren, wobei der k-te Satz von empfangenen Symbolen (130) eine echte Teilmenge der R·N empfangenen Symbole (146) der zumindest zwei Teil-Datenpakete (142) ist, um einen k-ten Satz von empfangenen codierten Bits (132) zu erhalten, wobei der k-te Satz von empfangenen codierten Bits (132) unter Ausnutzung der senderseitigen Redundanz einbringenden Codierung einen Rückschluss auf einen dem k-ten Satz von empfangenen codierten Bits (132) senderseitig korrespondierenden k-ten Satz von codierten Bits (153) ermöglicht,
- den k-ten Satz von empfangenen codierten Bits (132) zu decodieren, um unter Ausnutzung der senderseitigen Redundanz einbringenden Codierung einen k-ten Satz von geschätzten codierten Bits (164) zu ermitteln, und um den k-ten Satz von geschätzten Bits (164) unter Verwendung einer mit einer senderseitigen Abbildungsvorschrift übereinstimmenden Abbildungsvorschrift auf geschätzte Sendesymbole abzubilden, um einen k-ten Satz von geschätzten Sendesymbolen (134) zu erhalten;
- eine k+1-te Kanalzustandsinformation (128) unter Verwendung des k-ten Satzes von geschätzten Sendesymbolen (134) zu bestimmen.

11. Datenempfänger (110) nach dem vorangehenden Anspruch,
wobei der (k+1)-te Satz von empfangenen Symbolen (136) in den jeweiligen Teil-Datenpaketen (142) benachbart zu dem k-ten Satz von empfangenen Symbolen (130) angeordnet ist.

12. Datenempfänger (110) nach einem der vorangehenden Ansprüche,
wobei der Datenempfänger (110) ausgebildet ist, um in jedem Iterationsschritt k mit k=1 bis K einer Abfolge von K Iterationsschritten
- die k+1-te Kanalzustandsinformation (128) ferner unter Verwendung des (k-1)-ten Satzes von geschätzten Sendesymbolen und/oder unter Verwendung von Pilotsymbolen (144) der zumindest zwei separaten Teil-Datenpakete (142) zu schätzen.

13. Datenempfänger (110) nach einem der vorangehenden Ansprüche,
wobei der Datenempfänger (110) ausgebildet ist, um basierend auf Pilotsymbolen (144) der zumindest zwei separaten Teil-Datenpakete (142) den Kanalzustand des Übertragungskanals zu schätzen, um die (k=1)-te Kanalzustandsinformation (128) zu erhalten.

14. Verfahren (200) zum Empfangen eines Signals, wobei das Signal zumindest zwei separate Teil-Datenpakete aufweist, wobei die zumindest zwei separaten Teil-Datenpakete Symbole aufweisen, die codierte Bits abbilden, die aus einer für die zumindest zwei separaten Teil-Datenpakete gemeinsam durchgeführten Redundanz einbringenden Codierung einer Datenbitfolge resultieren, wobei das Verfahren aufweist:
Schätzen (202) eines Kanalzustands eines Übertragungskanals des Signals basierend auf dem empfangenen Signal, um eine erste Kanalzustandsinformation zu erhalten,
Demodulieren (204) eines ersten Satzes von empfangenen Symbolen aus verschiedenen Teil-Datenpaketen unter Verwendung der ersten Kanalzustandsinformation, wobei der erste Satz von empfangenen Symbolen eine echte Teilmenge der empfangenen Symbole der zumindest zwei Teil-Datenpakete ist, um einen ersten Satz von empfangenen codierten Bits zu erhalten, wobei der erste Satz von empfangenen codierten Bits unter Ausnutzung der senderseitigen Redundanz einbringenden Codierung einen Rückschluss auf einen dem ersten Satz von empfangenen codierten Bits senderseitig korrespondierenden ersten Satz von codierten Bits ermöglich,
Decodieren (206) des ersten Satzes von empfangenen codierten Bits, um unter Ausnutzung der senderseitigen Redundanz einbringenden Codierung einen ersten Satz von geschätzten codierten Bits zu ermitteln,
Abbilden (208) des ersten Satzes von geschätzten codierten Bits auf geschätzte Sendesymbole unter Verwendung einer mit einer senderseitigen Abbildungsvorschrift übereinstimmenden Abbildungsvorschrift, um einen ersten Satz von geschätzten Sendesymbolen zu erhalten;
Bestimmen (210) einer zweiten Kanalzustandsinformation unter Verwendung des ersten Satzes von geschätzten Sendesymbolen; und
Demodulieren eines zweiten Satz von empfangenen Symbolen (136) aus verschiedenen Teil-Datenpaketen (142) unter Verwendung der zweiten Kanalzustandsinformation (128), wobei der zweite Satz von empfangenen Symbolen (136) eine echte Teilmenge der empfangenen Symbole (146) der zumindest zwei Teil-Datenpakete (142) ist, um einen zweiten Satz von empfangenen codierten Bits (133) zu erhalten;
wobei der zweite Satz von empfangenen Symbolen (136) in den jeweiligen Teil-Datenpaketen (142) einen zeitlich größeren Abstand zu Pilotsymbolen (144) der zumindest zwei Teil-Datenpakete (142) aufweist als der erste Satz von empfangenen Symbolen (130).

15. Computerprogramm, umfassend Befehle, die bei der Ausführung des Programms durch einen Computer oder Mikroprozessor diesen veranlassen, das Verfahren nach dem vorangehenden Anspruch auszuführen.

## Claims

1. A data receiver (110),
wherein the data receiver (110) is configured to receive a signal (120), the signal (120) comprising at least two separate partial data packets (142), wherein the at least two separate partial data packets (142) comprise symbols (146) which map encoded bits (150) resulting from a redundancy-introducing encoding of a data bit sequence (152) performed jointly for the at least two separate partial data packets (142),
wherein the data receiver (110) is configured to estimate a channel state of a transmission channel (118) of the signal (120) based on the received signal (120) to obtain first channel state information (128),
wherein the data receiver (110) is configured to demodulate a first set of received symbols (130) from different partial data packets (142) using the first channel state information (128), wherein the first set of received symbols (130) is a real subset of the received symbols (146) of the at least two partial data packets (142) to obtain a first set of received encoded bits (132),
wherein the first set of received encoded bits (132) allows drawing conclusions as to a first set of encoded bits (153) corresponding on the transmitter side to the first set of received encoded bits (132), using the transmitter-side redundancy-introducing encoding,
wherein the data receiver (110) is configured to decode the first set of received encoded bits (132) to determine, using the transmitter-side redundancy-introducing encoding, a first set of estimated encoded bits (164), which corresponds to a first set of transmitted encoded bits with higher probability than the received encoded bits, and to map the first set of estimated encoded bits (164) to estimated transmission symbols using a mapping rule matching with a transmitter-side mapping rule to obtain a first set of estimated transmission symbols (134);
wherein the data receiver (110) is configured to determine second channel state information (128) using the first set of estimated transmission symbols (134);
wherein the data receiver (110) is configured to demodulate a second set of received symbols (136) from different partial data packets (142) using the second channel state information (128), wherein the second set of received symbols (136) is a real subset of the received symbols (146) of the at least two partial data packets (142) to obtain a second set of received encoded bits (133);
wherein the second set of received symbols (136) in the respective partial data packets (142) comprises a greater temporal spacing to pilot symbols (144) of the at least two partial data packets (142) than the first set of received symbols (130).

2. The data receiver (110) in accordance with the preceding claim,
wherein the first set of received symbols (130) in the respective partial data packets (142) is arranged adjacent to pilot symbols (144) of the at least two partial data packets (142).

3. The data receiver (110) in accordance with any of the preceding claims,
wherein the data receiver (110) is configured to estimate the channel state of the transmission channel (118) at first based on pilot symbols (144) of the at least two separate partial data packets (142) to obtain the first channel state information (128).

4. The data receiver (110) in accordance with any of the preceding claims,
wherein the data receiver (110) is configured to estimate the channel state using the first set of estimated transmission symbols (134) to obtain the second channel state information (128).

5. The data receiver (110) in accordance with any of the preceding claims,
wherein the data receiver (110) is configured to estimate the channel state of the transmission channel (118) for each of the at least two separate partial data packets (142).

6. The data receiver (110) in accordance with any of the preceding claims,
wherein the data receiver (110) is configured to decode the first set of received encoded bits (132) using a Viterbi decoder.

7. The data receiver (110) in accordance with any of the preceding claims,
wherein the data receiver (110) is configured to select the first set of received symbols (130) from the received symbols (146) of the at least two separate partial data packets (142) based on an interleaving pattern known to the data receiver (110), wherein the interleaving pattern matches with a transmitter-side interleaving pattern based on which the encoded bits (152) are divided on the data transmitter side interleaved among the at least two separate partial data packets (142).

8. The data receiver (110) in accordance with any of the preceding claims,
wherein the data receiver (110) is configured to provide a first set of estimated transmission symbols (134) with reliability information based on the first set of received encoded bits (132).

9. The data receiver (110) in accordance with any of the preceding claims,
wherein the data receiver (110) is configured to demodulate the first set of received symbols (130) and to estimate a reliability for the first set of encoded bits (132) or each encoded bit of the first set of encoded bits (132) to additionally obtain reliability information for the first set of encoded bits (132).

10. A data receiver (110) for receiving a signal (120), the signal (120) comprising at least two separate partial data packets (142), wherein the at least two separate partial data packets (142) comprise 1/B·R·N symbols (146) which map R·N encoded bits (152) resulting from a redundancy-introducing encoding of N data bits (150) with a code rate of 1/R, performed together for the at least two separate partial data packets (142), B indicating the number of encoded bits mapped per symbol,
wherein the data receiver (110) is configured to estimate a channel state of a transmission channel (118) of the signal (120) based on the received signal (120) to obtain (k=1)-th channel state information,
wherein the data receiver (110) is configured to, in each iteration step k with k=1 to K of a sequence of K iteration steps,
- demodulate a k-th set of received symbols (130) from different partial data packets (142) using the k-th channel state information, the k-th set of received symbols (130) being a real subset of the R·N received symbols (146) of the at least two partial data packets (142), to obtain a k-th set of received encoded bits (132), wherein the k-th set of received encoded bits (132) allows drawing conclusions as to a k-th set of encoded bits (152) corresponding on the transmitter side to the k-th set of received encoded bits (132), using the transmitter-side redundancy-introducing encoding,
- decode the k-th set of received encoded bits (132) to determine a k-th set of estimated encoded bits (164) using the transmitter-side redundancy-introducing encoding, and to map the k-th set of estimated bits (164) to estimated transmission symbols using a mapping rule matching with a transmitter-side mapping rule to obtain a k-th set of estimated transmission symbols (134);
- determine k+1-th channel state information (128) using the k-th set of estimated transmission symbols (134).

11. The data receiver (110) in accordance with the preceding claim,
wherein the (k+1)-th set of received symbols (136) in the respective partial data packets (142) is arranged adjacent to the k-th set of received symbols (130).

12. The data receiver (110) in accordance with any of the preceding claims,
wherein the data receiver (110) is configured to, in each iteration step k with k=1 to K of a sequence of K iteration steps,
- estimate the k+1-th channel state information (128) additionally using the (k-1)-th set of estimated transmission symbols and/or using pilot symbols (144) of the at least two separate partial data packets (142).

13. The data receiver (110) in accordance with any of the preceding claims,
wherein the data receiver (110) is configured to estimate the channel state of the transmission channel based on pilot symbols (144) of the at least two separate partial data packets (142) to obtain the (k=1)-th channel state information (128).

14. A method (200) for receiving a signal, the signal comprising at least two separate partial data packets, wherein the at least two separate partial data packets comprise symbols which map encoded bits resulting from a redundancy-introducing encoding of a data bit sequence performed jointly for the at least two separate partial data packets, the method comprising;
estimating (202) a channel state of a transmission channel of the signal based on the received signal to obtain first channel state information,
demodulating (204) a first set of received symbols from different partial data packets using the first channel state information, wherein the first set of received symbols is a real subset of the received symbols of the at least two partial data packets to obtain a first set of received encoded bits, wherein the first set of received encoded bits allows drawing conclusions as to a first set of encoded bits corresponding on the transmitter side to the first set of received encoded bits, using the transmitter-side redundancy-introducing encoding,
decoding (206) the first set of received encoded bits to determine a first set of estimated encoded bits using the transmitter-side redundancy-introducing encoding,
mapping (208) the first set of estimated encoded bits to estimated transmission symbols using a mapping rule matching with a transmitter-side mapping rule to obtain a first set of estimated transmission symbols;
determining (210) second channel state information using the first set of estimated transmission symbols; and
demodulating a second set of received symbols (136) from different partial data packets (142) using the second channel state information (128), wherein the second set of received symbols (136) is a real subset of the received symbols (146) of the at least two partial data packets (142) to obtain a second set of received encoded bits (133);
wherein the second set of received symbols (136) in the respective partial data packets (142) comprises greater a temporal spacing to pilot symbols (144) of the at least two partial data packets (142) than the first set of received symbols (130).

15. A computer program comprising instructions which, when the program is executed by a computer or microprocessor, cause the same to execute the method in accordance with the preceding claims.

## Revendications

1. Récepteur de données (110),
dans lequel le récepteur de données (110) est conçu pour recevoir un signal (120), dans lequel le signal (120) présente au moins deux paquets de données partiels séparés (142), dans lequel les au moins deux paquets de données partiels séparés (142) présentent des symboles (146) qui reproduisent les bits codés (150) qui résultent d'un codage d'une séquence de bits de données (152) introduisant une redondance effectué en commun pour les au moins deux paquets de données partiels séparés (142),
dans lequel le récepteur de données (110) est conçu pour estimer, sur base du signal reçu (120), un état de canal d'un canal de transmission (118) du signal (120) pour obtenir une première information d'état de canal (128),
dans lequel le récepteur de données (110) est conçu pour démoduler, à l'aide de la première information d'état de canal (128), un premier ensemble de symboles reçus (130) de différents paquets de données partiels (142), dans lequel le premier ensemble de symboles reçus (130) est une quantité partielle réelle des symboles reçus (146) des au moins deux paquets de données partiels (142), pour obtenir un premier ensemble de bits codés reçus (132),
dans lequel le premier ensemble de bits codés reçus (132) permet, à l'aide du codage introduisant une redondance du côté de l'émetteur, une conclusion sur un premier ensemble de bits codés (153) correspondant du côté de l'émetteur au premier ensemble de bits codés reçus (132),
dans lequel le récepteur de données (110) est conçu pour décoder le premier ensemble de bits codés reçus (132) pour déterminer, à l'aide du codage introduisant une redondance du côté de l'émetteur, un premier ensemble de bits codés estimés (164) qui correspond avec une plus haute probabilité à un premier ensemble de bits codés envoyés que les bits codés reçus, et pour reproduire le premier ensemble de bits codés estimés (164) à l'aide d'une règle de reproduction correspondant à une règle de reproduction du côté de l'émetteur sur les symboles d'émission estimés, pour obtenir un premier ensemble de symboles d'émission estimés (134);
dans lequel le récepteur de données (110) est conçu pour déterminer une deuxième information d'état de canal (128) à l'aide du premier ensemble de symboles d'émission estimés (134);
dans lequel le récepteur de données (110) est conçu pour démoduler, à l'aide de la deuxième information d'état de canal (128), un deuxième ensemble de symboles reçus (136) de différents paquets de données partiels (142), dans lequel le deuxième ensemble de symboles reçus (136) est une quantité partielle réelle des symboles reçus (146) des au moins deux paquets de données partiels (142), pour obtenir un deuxième ensemble de bits codés reçus (133);
dans lequel le deuxième ensemble de symboles reçus (136) présente, dans les paquets de données partiels respectifs (142), une distance plus grande dans le temps par rapport aux symboles pilotes (144) des au moins deux paquets de données partiels (142) que le premier ensemble de symboles reçus (130).

2. Récepteur de données (110) selon la revendication précédente,
dans lequel le premier ensemble de symboles reçus (130) est disposé dans les paquets de données partiels respectifs (142) adjacent aux symboles pilotes (144) des au moins deux paquets de données partiels (142).

3. Récepteur de données (110) selon l'une des revendications précédentes,
dans lequel le récepteur de données (110) est conçu pour estimer tout d'abord, sur base des symboles pilotes (144) des au moins deux paquets de données partiels séparés (142), l'état de canal du canal de transmission (118) pour obtenir la première information d'état de canal (128).

4. Récepteur de données (110) selon l'une des revendications précédentes,
dans lequel le récepteur de données (110) est conçu pour estimer l'état de canal à l'aide du premier ensemble de symboles d'émission estimés (134) pour obtenir la deuxième information d'état de canal (128).

5. Récepteur de données (110) selon l'une des revendications précédentes,
dans lequel le récepteur de données (110) est conçu pour estimer l'état de canal du canal de transmission (118) pour chacun des au moins deux paquets de données partiels séparés (142).

6. Récepteur de données (110) selon l'une des revendications précédentes,
dans lequel le récepteur de données (110) est conçu pour décoder le premier ensemble de bits codés reçus (132) à l'aide d'un décodeur de Viterbi.

7. Récepteur de données (110) selon l'une des revendications précédentes,
dans lequel le récepteur de données (110) est conçu pour sélectionner le premier ensemble de symboles reçus (130) parmi les symboles reçus (146) des au moins deux paquets de données partiels séparés (142) sur base d'un modèle d'entrelacement connu du récepteur de données (110), dans lequel le modèle d'entrelacement coïncide avec un modèle d'entrelacement du côté de l'émetteur sur base duquel les bits codés (152) sont répartis de manière entrelacée du côté de l'émetteur de données sur les au moins deux paquets de données partiels séparés (142).

8. Récepteur de données (110) selon l'une des revendications précédentes,
dans lequel le récepteur de données (110) est configuré pour fournir, sur base du premier ensemble de bits codés reçus (132), un premier ensemble de symboles d'émission estimés (134) avec l'information de fiabilité.

9. Récepteur de données (110) selon l'une des revendications précédentes,
dans lequel le récepteur de données (110) est conçu pour démoduler le premier ensemble de symboles reçus (130) et pour estimer une fiabilité pour le premier ensemble de bits codés (132) ou pour chaque bit codé du premier ensemble de bits codés (132), pour obtenir en outre une information de fiabilité pour le premier ensemble de bits codés (132).

10. Récepteur de données (110) destiné à recevoir un signal (120), dans lequel le signal (120) présente au moins deux paquets de données partiels séparés (142), dans lequel les au moins deux paquets de données partiels séparés (142) présentent des symboles 1/B·R·N (146) qui reproduisent des bits codés R·N (152) qui résultent d'un codage de N bits de données (150) introduisant une redondance avec un taux de codage de 1/R effectué en commun pour les au moins deux paquets de données partiels séparés (142), où B indique le nombre de bits codés reproduits par symbole,
dans lequel le récepteur de données (110) est conçu pour estimer, sur base du signal reçu (120), un état de canal d'un canal de transmission (118) du signal (120) pour obtenir une (k=1)-ième information d'état de canal,
dans lequel le récepteur de données (110) est conçu pour démoduler, à chaque étape d'itération k, où k=1 à K d'une séquence de K étapes d'itération,
- à l'aide de la k-ième information d'état de canal, un k-ième ensemble de symboles reçus (130) de différents paquets de données partiels (142), où le k-ième ensemble de symboles reçus (130) est une quantité partielle réelle des symboles reçus R·N (146) des au moins deux paquets de données partiels (142), pour obtenir un k-ième ensemble de bits codés reçus (132), où le k-ième ensemble de bits codés reçus (132) permet, à l'aide du codage introduisant une redondance du côté de l'émetteur, une conclusion sur un k-ième ensemble de bits codés (153) correspondant du côté de l'émetteur au k-ième ensemble de bits codés reçus (132),
- pour décoder le k-ième ensemble de bits codés reçus (132) pour déterminer, à l'aide du codage introduisant une redondance du côté de l'émetteur, un k-ième ensemble de bits codés estimés (164), et pour reproduire le k-ième ensemble de bits estimés (164) à l'aide d'une règle de reproduction correspondant à une règle de reproduction du côté de l'émetteur sur les symboles d'émission estimés pour obtenir un k-ème ensemble de symboles d'émission estimés (134);
- pour déterminer une k+1-ième information d'état de canal (128) à l'aide du k-ième ensemble de symboles d'émission estimés (134).

11. Récepteur de données (110) selon la revendication précédente,
dans lequel le (k+1)-ième ensemble de symboles reçus (136) est disposé dans les paquets de données partiels respectifs (142) adjacent au k-ième ensemble de symboles reçus (130).

12. Récepteur de données (110) selon l'une des revendications précédentes,
dans lequel le récepteur de données (110) est conçu pour estimer, à chaque étape d'itération k, où k=1 à K d'une séquence de K étapes d'itération,
- la k+1-ième information d'état de canal (128) par ailleurs à l'aide du (k-1)-ième ensemble de symboles d'émission estimés et/ou à l'aide des symboles pilotes (144) des au moins deux paquets de données partiels séparés (142).

13. Récepteur de données (110) selon l'une des revendications précédentes,
dans lequel le récepteur de données (110) est conçu pour estimer, sur base de symboles pilotes (144) des au moins deux paquets de données partiels séparés (142), l'état de canal du canal de transmission pour obtenir la (k=1)-ième information d'état de canal (128).

14. Procédé (200) permettant de recevoir un signal, dans lequel le signal présente au moins deux paquets de données partiels séparés, dans lequel les au moins deux paquets de données partiels séparés présentent des symboles qui reproduisent les bits codés qui résultent d'un codage d'une séquence de bits de données introduisant une redondance effectué en commun pour les au moins deux paquets de données partiels séparés, dans lequel le procédé présente le fait de:
estimer (202) un état de canal d'un canal de transmission du signal sur base du signal reçu pour obtenir une première information d'état de canal,
démoduler (204) un premier ensemble de symboles reçus de différents paquets de données partiels à l'aide de la première information d'état de canal, où le premier ensemble de symboles reçus est une quantité partielle réelle des symboles reçus des au moins deux paquets de données partiels, pour obtenir un premier ensemble de bits codés reçus, où le premier ensemble de bits codés reçus permet, à l'aide du codage introduisant une redondance du côté de l'émetteur, une conclusion sur un premier ensemble de bits codés correspondant du côté de l'émetteur au premier ensemble de bits codés reçus,
décoder (206) le premier ensemble de bits codés reçus pour déterminer, à l'aide du codage introduisant une redondance du côté de l'émetteur, un premier ensemble de bits codés estimés,
reproduire (208) le premier ensemble de bits codés estimés sur les symboles d'émission estimés à l'aide d'une règle de reproduction correspondant à une règle de reproduction du côté de l'émetteur pour obtenir un premier ensemble de symboles d'émission estimés;
déterminer (210) une deuxième information d'état de canal à l'aide du premier ensemble de symboles d'émission estimés; et
démoduler un deuxième ensemble de symboles reçus (136) de différents paquets de données partiels (142) à l'aide de la deuxième information d'état de canal (128), où le deuxième ensemble de symboles reçus (136) est une quantité partielle réelle des symboles reçus (146) des au moins deux paquets de données partiels (142), pour obtenir un deuxième ensemble de bits codés reçus (133);
dans lequel le deuxième ensemble de symboles reçus (136) dans les paquets de données partiels respectifs (142) présente une plus grande distance dans le temps par rapport aux symboles pilotes (144) des au moins deux paquets de données partiels (142) que le premier ensemble de symboles reçus (130).

15. Programme d'ordinateur, comportant des instructions qui, lorsque le programme est exécuté par un ordinateur ou un microprocesseur, amènent ce dernier à réaliser le procédé selon la revendication précédente.
